# EUROPEAN PATENT SPECIFICATION

(11) **EP 4 489 910 B1**
(45) Date of publication and mention of the grant of the patent: **03.06.2026**
(21) Application number: 23709445.3
(22) Date of filing: 10.03.2023
(51) Int. Cl.: B01L 3/00, B01L 9/00

(54) **AUTOMATION STATION FOR ENZYMATIC POLYNUCLEOTIDE SYNTHESIS**
AUTOMATISIERUNGSSTATION FÜR DIE ENZYMATISCHE POLYNUKLEOTIDSYNTHESE
STATION D'AUTOMATISATION POUR LA SYNTHÈSE ENZYMATIQUE DE POLYNUCLÉOTIDES

(30) Priority: 11.03.2022 FR 2202165; 11.03.2022 FR 2202170; 11.03.2022 FR 2202176
(43) Date of publication of application: 15.01.2025
(73) Proprietor: DNA Script, 94270 Le Kremlin-Bicêtre (FR)
(72) Inventor: LACHAIZE, Henri, 94270 Le Kremlin-Bicêtre (FR); BELIN, Paul, 94270 Le Kremlin-Bicêtre (FR); MCCUSKER, Sean, South San Francisco, California 94080 (US); HAO, Grace, South San Francisco, California 94080 (US); MARTIN, Carl, South San Francisco, California 94080 (US); PEREZ, Jared, South San Francisco, California 94080 (US); ARTIGUE, Marc, 94270 Le Kremlin-Bicêtre (FR)
(74) Representative: Plasseraud IP
(86) International application number: PCT/EP2023/056160
(87) International publication number: WO 2023/170266

(56) References cited:
- EP-A2- 1 358 936
- EP-A2- 1 491 258

## Description

### FIELD OF THE INVENTION

The present disclosure relates generally to an automation vacuum transfer station in an enzymatic polynucleotide synthesis system.

### INTRODUCTION

Interest in enzymatic approaches to polynucleotide synthesis has recently increased not only because of increased demand for synthetic polynucleotides in many areas, such as synthetic biology, CRISPR-Cas9 applications, high-throughput sequencing, and the like, but also because of the limitations of chemical approaches to polynucleotide synthesis, such as the difficulty of performing multi-step synthesis reactions under inert atmospheres and moisture-free environments, the upper limits on product length, the use of, and needed disposal of, organic solvents, and so on, e.g. Jensen et al, Biochemistry, 57: 1821-1832 (2018); Sindalar et al, Nucleic Acids Research, 23(6):982-987 (1995); Lashkari et al, Proc. Natl. Acad. Sci., 92: 7912-7915 (1995); Hargreaves et al, Nucleosides, Nucleotides and Nucleic Acids, 34: 691-707 (2015). Enzymatic synthesis is attractive not only because of the specificity and efficiency of enzymes, but also because of its use of mild aqueous reaction conditions which simplify handling and eliminate the need for hazardous reagents.

Among the processes for automated enzymatic synthesis is vacuum transfer. Automated enzymatic synthesis can be performed in a plurality of reaction wells, each reaction well being capable of accepting reactants, wash solutions, synthesis supports through an inlet or opening, holding such reactants, wash solutions and synthesis supports for predetermined incubation times, and having such reactants and wash solutions removed through an outlet operationally associated with a filter that retains the synthesis supports. The plurality of reaction chambers are usually provided in a regular, e.g. rectilinear, planar array.

EP 1 358 936 A2 describes a vacuum transfert apparatus of the prior art.

In view of the above, parallel enzymatic synthesis of polynucleotides using template-free polymerases would be advanced if the transfer of an optimal number of reactants was performed in parallel within a minimal limited space.

### SUMMARY

According to one or more embodiments of the present disclosure, there is provided an apparatus for enzymatic synthesis of a plurality of polynucleotides, the apparatus comprising a first well plate of a plurality of well plates having a first number of wells; a second well plate of the plurality of well plates having the first number of wells arranged to correspond to the number of the wells of the first well plate; and a vacuum transfer station configured with a plate lifting platform that is moved vertically by a horizontally driven wedge-shaped component, the plate lifting platform being configured to move vertically to raise and lower the second well plate, wherein when the first well plate is moved to and placed on the vacuum transfer station above the second well plate, the wedge-shaped component raises the plate lifting platform to position the second well plate to a predetermined distance from the first well plate.

The apparatus according to the invention may comprise various stations, each dedicated to a step of the enzymatic synthesis. As such, the well plates may require to be moved from one station to another. One of these stations may be a vacuum transfer station in which the contents of a given well plate may be transferred to another well plate. To this end, the vacuum transfer station is operated by a wedge-based drive mechanism. This wedge-based drive mechanism comprises a wedge-shaped component whose role is to raise the second well plate in order to place it at a predetermined distance of the first well plate. Such predetermined distance can for instance depend on the nature of the plates. The wedge-shaped component of the wedge-based drive mechanism is moved longitudinally by an appropriate electric motor as a stepper motor, and this component has a surface which is in contact with a corresponding surface or edge of the plate lifting platform to push upwards and to retain downwards in a step-by-step movement.

The first well plate and the second well plate have the same number of reaction wells, so that when the first well plate is placed on top of the second well plate each well of the first well plate corresponds to a well of the second well plate. At least one of the well plates may be configured for the enzymatic synthesis; as such, one of the plates may be a synthesis plate with each of its wells containing a predetermined quantity of synthesis support with initiators attached.

The shape and the design of the wedge-shaped component are in accordance with space constraints within the apparatus.

According to one or more embodiments, the first well plate and the second well plate placed on the vacuum transfer station are respectively a synthesis plate and a purification plate or respectively a purification plate and a quantification plate, wherein the predetermined distance is between a bottom surface of the first well plate and a bottom surface of the second well plate, and wherein the determined distance is function to the type of the well plates placed on the vacuum transfer station and/or function to the number of wells of the well plates.

According to one or more embodiments, the first well plate is a synthesis plate for the enzymatic synthesis having 96 wells, the second well plate is a purification plate having 96 wells, and the predetermined distance is a first predetermined distance between a bottom surface of the synthesis plate and a bottom surface of the purification plate.

According to one or more embodiments, the first well plate is a synthesis plate for the enzymatic synthesis having 384 wells, the second well plate is a purification plate having 384 wells, and the predetermined distance is a first predetermined distance between a bottom surface of the synthesis plate and a bottom surface of the purification plate.

According to one or more embodiments, the first well plate is a purification plate having 96 wells, the second well plate is a quantification plate having 96 wells, and the predetermined distance is a second predetermined distance between a bottom surface of the purification plate and a bottom surface of the quantification plate.

According to one or more embodiments, the first well plate is a purification plate having 384 wells, the second well plate is a quantification plate having 384 wells, and the predetermined distance is a second predetermined distance between a bottom surface of the purification plate and a bottom surface of the quantification plate.

According to one or more embodiments, the vacuum transfer station includes a lid having a frame structure that is sized to mount the first well plate, and the lid has an opening within the frame structure that is sufficient to allow communication between the wells in the first well plate and the corresponding wells in the second well plate.

According to one or more embodiments, the plate lifting platform includes a tab extending from an edge of the plate lifting platform, and the wedge-shaped component includes a diagonal edge, and the diagonal edge of the wedge-shaped component slides against the tab to raise or lower the plate lifting platform.

According to one or more embodiments, the vacuum transfer station includes a drainage section below the plate lifting platform for removing leakage that may occur from the second well plate, wherein the drainage section includes an angled surface.

The present invention also relates to a method of enzymatic synthesis of a plurality of polynucleotides by an enzymatic synthesis apparatus that includes a first well plate of a plurality of well plates having a first number of wells, a second well plate of the plurality of well plates having a number of wells arranged to correspond to the number of wells of the first well plate, and a vacuum transfer station configured with a plate lifting platform, the method comprising positioning the second well plate on the plate lifting platform; positioning the first well plate on the vacuum transfer station, above the second well plate; vertically moving the plate lifting platform by a horizontally driven wedge-shaped component to raise the second well plate and position this second well plate to a predetermined distance from the first well plate.

According to one or more embodiments, the method further comprises mounting a lid on the vacuum transfer station so that the first well plate is positioned on this lid.

According to one or more embodiments, the method further comprises drawing, by a vacuum source of the vacuum transfer station, a solution from the wells of the first well plate through a filter of the first well plate to obtain a product in the wells of the second well plate.

According to one or more embodiments, the predetermined distance between the first well plate and the second well plate is a first predetermined distance, the enzymatic synthesis apparatus further including a third well plate of the plurality of well plates having a number of wells, a fourth well plate of the plurality of well plates having a number of wells arranged to correspond with the number of wells of the third well plate, the method further comprising removing from the vacuum transfer station both first well plate and second well plate; positioning the fourth well plate on the plate lifting platform; positioning the third well plate on the vacuum transfer station, above the fourth well plate; vertically moving the plate lifting platform by the horizontally driven wedge-shaped component to raise the fourth well plate and position this fourth well plate to a second predetermined distance from the third well plate, the second predetermined distance being different from the first predetermined distance.

According to one or more embodiments, the method further comprises adding a desalting solution to the wells of the first well plate; drawing, by the vacuum source of the vacuum transfer station, desalted polynucleotides through a filter of the first well plate; and capturing, in wells of the second well plate, desalted polynucleotide products.

According to one or more embodiments, the method further comprises adding an elution solution to desalted polynucleotide products in wells of the third well plate; drawing, by a vacuum source of the vacuum transfer station, eluted polynucleotides through a filter of the third well plate; and capturing, in wells of the fourth well plate, eluted polynucleotide products.

According to one or more embodiments, the first well plate is a synthesis plate and the second well plate is a purification plate, and when the synthesis plate is moved to and placed on the vacuum transfer station above the purification plate, the plate lifting platform is raised by the wedge-shaped component to position the purification plate to a predetermined distance from the synthesis plate, and the predetermined distance is a first predetermined distance between a bottom surface of the synthesis plate and a bottom surface of the purification plate.

According to one or more embodiments, the third well plate is a purification plate and the fourth well plate is a quantification plate, and when the purification plate is moved to and placed on the vacuum transfer station above the quantification plate, the plate lifting platform is raised by the wedge-shaped component to position the quantification plate to a predetermined distance from the purification plate, and wherein the predetermined distance is a second predetermined distance between a bottom surface of the purification plate and a bottom surface of the quantification plate.

According to one or more embodiments, the same purification plate is on the one hand the second well plate cooperating with a synthesis plate in a first step in the vacuum transfer station and on the other hand the third well plate cooperating with a quantification plate in a second step in said vacuum transfer station.

According to one or more embodiments, the method further comprises vertically moving the plate lifting platform to a fully raised position that is even with an uppermost surface of the vacuum transfer station so that it receives the second well plate or the fourth well plate.

In one or more embodiments, each synthesized polynucleotide or at least some of the synthesized polynucleotides may have a predetermined sequence.

According to one or more embodiments, the present disclosure also relates to a vacuum transfer station, configured to transfer a volume of solution to or from a plurality of reaction chambers. The vacuum transfer station has a rectangular base configured to hold the plurality of reaction chambers. A vacuum tubing connector is connected to a corner of the base and in fluid communication with a filter side or a sample side of the plurality of reaction chambers when the reaction chambers are held by the base.

Such a layout of a vacuum tubing connector allows the arrangement of other component of the vacuum transfer station on opposite side while allowing the installation of other station in regard with the vacuum transfer station, in a context of an apparatus for enzymatic synthesis with several stations which is required as compact as possible.

According to one or more embodiments, the vacuum tubing connector is elongated in a direction parallel with the shorter of two lateral dimensions of the base.

According to one or more embodiments, the vacuum tubing connector is elongated in a direction parallel with the longer of two lateral dimensions of the base.

According to one or more embodiments, the corner protrudes from a side of the base. The corner may protrude 0.5-4 cm from this side of the base.

According to one or more embodiments, the vacuum tubing connector is in fluid communication with an interior fluid line extending in the corner and in fluid communication with an internal volume of the base. The interior fluid line may have an inner diameter in a range of 0.1-2 cm.

According to one or more embodiments, the interior fluid line forms a substantially perpendicular angle with an elongation direction of the vacuum tubing connector.

According to one or more embodiments, the interior fluid line comprises a segment substantially perpendicular to an elongation direction of the vacuum tubing connector, the segment extending to the same corner as the vacuum tubing connector and forming an aperture at the corner of the base.

According to one or more embodiments, a removably attached stopper fluidly seals the aperture.

According to one or more embodiments, the interior fluid line forms a second aperture at the corner of the base in which the vacuum tubing connector is removably attached. According to one or more embodiments, the first aperture and the second aperture have equivalent geometry.

According to one or more embodiments, the vacuum tubing connector is removably attached to the base. The removable attachment may be made by a screw thread mechanism, or by an unthreaded fitting.

According to one or more embodiments, the vacuum tubing connector is configured to attach to an elastomeric tubing by press fit coupling.

According to one or more embodiments, at least 80% of the length of the vacuum tubing connector adjacent to the end of the vacuum tubing connector is rotationally symmetric.

According to one or more embodiments, a third of the length of the vacuum tubing connector adjacent to the end of the vacuum tubing connector has an outer diameter that is 5-20% greater than an outer diameter of the vacuum tubing connector located in a middle third of its length.

According to one or more embodiments, the vacuum transfer station also has a tubing connector vertically offset from the vacuum tubing connector and extending in a direction substantially parallel to an extension direction of the vacuum tubing connector.

According to one or more embodiments, the present disclosure relates to a method for enzymatic polynucleotide synthesis, such as DNA or RNA synthesis, using an automated apparatus comprising the vacuum transfer station of the invention. The method involves initiating a control system of the apparatus to begin a polynucleotide synthesis process. This polynucleotide synthesis has at least one step of removing a volume of waste eluent from a plurality of reaction chambers placed on or within the vacuum transfer station by application of a pressure differential through the vacuum tubing connector.

According to one or more embodiments, the vacuum transfer station further comprises a drainage section underneath the plurality of reaction chambers, wherein the drainage section is substantially planar and tilted in a direction of the corner of the base having the vacuum tubing connector.

According to one or more embodiments, the drainage section and vacuum tubing connector are in fluid communication so that the waste eluent collected on the drainage section is directed towards and removed through the vacuum tubing connector.

According to one or more embodiments, the present disclosure also relates to an apparatus for enzymatic synthesis of a plurality of polynucleotides, the apparatus comprising a plurality of well plates, each having a predetermined number of reaction wells equipped with a filter in which the enzymatic synthesis is performed, the enzymatic synthesis including incubation by heating and agitation by shaking, the apparatus further comprising a heater-shaker module for applying heat and agitation during the enzymatic synthesis, said heater-shaker module comprising a well plate holder configured to receive at least one of the plurality of well plates and a clamping mechanism for clamping the one or more of the plurality of well plates in the well plate holder during the enzymatic synthesis.

So, the heater-shaker module of the invention is equipped with a clamping mechanism to maintain one or more plates in the heater-shaker module. Such a clamping mechanism allows to prevent movement of the plates, such as synthesis plate, purification plate or quantification plate, during temperature regulation and agitation operations which are a part of the process of enzymatic synthesis.

According to one or more embodiments, the clamping mechanism comprises at least a pair of clamps positioned on opposite ends of the well plate holder according to a longitudinal direction, each clamp being movable between a locked position wherein the clamp is in contact with a surface of a well plate disposed in the well plate holder of the heater-shaker module and an unlocked position wherein the clamp is at a distance to such plate to allow a plate mover to displace it.

According to one or more embodiments, the clamping mechanism comprises a pair of clamp levers, each clamp lever being fixed at a mounted end to an axis of rotation of the respective clamp, each clamp lever being configured for guiding the movement of the corresponding clamp between the locked position and the unlocked position, the pair of clamp levers opening the clamps in the unlocked position when the clamp levers are pushed outwards away from each other in the longitudinal direction, and the pair of clamp levers closing the clamps in the locked position when the clamp levers are pushed inwards towards each other.

The clamp levers are located at a transversal end of the clamp and allow easy gripping, either by a user when needed, or automatically by a robotic arm of the plate mover of the apparatus without the risk of being in contact with the well plate in place in the well plate holder.

According to a feature of the invention, each clamp lever includes a rotating member at an end opposite from the mounted end of the respective clamp lever, and the rotating members facilitate movement of the plate mover past the levers while placing or removing a well plate.

According to one or more embodiments, the clamping mechanism further comprises a pair of release latches, each release latch being movable between a blocking position wherein the release latch is in the way of the movement of a clamp and a releasing position wherein the release latch is out of the way of the movement of this clamp.

According to one or more embodiments, the clamping mechanism comprises further a pair of springs for respectively spring loading one end of each release latch opposite to a free end of said release latch for cooperating with the clamp, each release latch having said releasing position when the spring-loaded end is pressed.

Each release latch can be mounted in rotation to block or not the position of the clamp according to a rotational movement. This rotation can be made around a transverse axis, parallel to the pivot axis of the clamp. Alternatively, the release latch can move by sliding along the well plate holder and block or not the position of the clamp depending on a translational movement.

According to one or more embodiments, the clamp of the clamping mechanism is configured to clamp one or two well plates. It has to be understood that, when the clamp is opened, one or more well plates can be placed on or removed from the heater-shaker module.

According to one or more embodiments, the plate mover comprises a robotic arm configured to move, place and remove a well plate on the heater-shaker module.

According to one or more embodiments, the rotating members facilitate movement of the robotic arm past the clamp levers while placing or removing a well plate.

A well plate positioned in the well plate holder and clamped by the clamping mechanism may be a synthesis well plate, or a purification well plate, or a quantification plate.

According to one or more embodiments, there is also provided a method of enzymatic synthesis of a plurality of polynucleotides by an apparatus including a heater-shaker module for applying the heat and agitation during the enzymatic synthesis, the heater-shaker module having a clamping mechanism for clamping one or more well plates during the enzymatic synthesis, the clamping mechanism comprising a pair of clamps positioned on opposite ends of a well plate holder, a pair of clamp levers mounted to an axis of rotation of the respective clamp, the method comprising opening the clamps by pushing the pair of clamp levers outwards away from each other in a horizontal direction; placing at least one of the well plates on the well plate holder of the heater-shaker module; closing the clamps by pushing the pair of clamp levers inwards towards each other in order to sealingly mount the at least one of the well plates in the heater-shaker module; and performing the enzymatic synthesis in reaction wells of the at least one of the well plates, each having a predetermined number of the reaction wells equipped with a filter.

According to one or more embodiments, the clamping mechanism further comprises a pair of release latches, each having a spring for spring loading one end of each release latch, a free end of each release latch for locking and unlocking the respective clamp, and the method further comprises pressing the spring-loaded end in order to release each release latch from the respective clamp; opening, by the pair of clamp levers, the clamp; removing a first well plate from the heater-shaker module; placing a second well plate and the first well plate on the heater-shaker module, where the second well plate is beneath the first well plate; closing, by the pair of clamp levers, the clamps in order to sealingly mount the first well plate and the second well plate in the heater-shaker module.

According to one or more embodiments, wherein the first well plate is a synthesis well plate and the second well plate is a purification well plate, the method further comprises delivering an isolation solution to reaction chambers of the synthesis well plate and incubating the reaction chambers; and applying a vacuum to transfer a reaction mixture of each reaction chamber to the purification chamber immediate below it in the purification well plate.

According to one or more embodiments, wherein the first well plate is a purification well plate and the second well plate is a quantification well plate, the method further comprises delivering an elution solution to reaction chambers of the purification well plate; and applying a vacuum to transfer a reaction mixture of each reaction chamber to a quantification chamber immediately below it in the quantification well plate.

According to one or more embodiments, the method further comprises pressing the spring-loaded end in order to release each release latch from the respective clamp; opening, by the pair of clamp levers, the clamps; removing the first well plate from the heater-shaker module; and removing the second well plate from the heater-shaker module.

These above-characterized aspects, as well as other aspects, of the present invention are exemplified in a number of illustrated implementations and applications, some of which are shown in the figures and characterized in the claims section that follows. However, the above summary is not intended to describe each illustrated embodiment or every implementation of the present invention.

### BRIEF DESCRIPTION OF THE DRAWINGS

[FIG.1] illustrates diagrammatically the basic steps of enzymatic synthesis of a polynucleotide;
[FIG.2] illustrates a planar array of reaction chambers in the form of a rectilinear arrangement of n reaction wells in a planar substrate based on a 96 wells plate;
[FIG.3] illustrates an exemplary instrument for performing enzymatic polynucleotide synthesis;
[FIG.4A] is a schematic diagram of stations within the instrument of FIG.3;
[FIG.4B] is a schematic diagram of a top view of the stations;
[FIG.5A] is a top view of an exemplary arrangement of a reagent tray for 96 reaction wells;
[FIG.5B] is a top view of an exemplary arrangement of a reagent tray for 384 reaction wells;
[FIG.6A] illustrates an exemplary sipper plate for a 96 well synthesis,
[FIG.6B] illustrates an exemplary sipper plate for a 384 well synthesis;
[FIG.7A] illustrates an exemplary heater/shaker module;
[FIG.7B] illustrates the exemplary heater/shaker module of FIG.7A;
[FIG.8A] illustrates distance between plates in a 96 plate format;
[FIG.8B] illustrates distance between other plates in a 96 plate format;
[FIG.9A] illustrates distance between plates in a 384 plate format;
[FIG.9B] illustrates distance between other plates in a 384 plate format;
[FIG.10A] is schematic diagram of a vacuum transfer station having a wedge-based drive mechanism;
[FIG.10B] is another schematic diagram of a vacuum transfer station having a wedge-based drive mechanism;
[FIG. 10C] is schematic diagrams of the vacuum transfer station with nozzle manifold;
[FIG.10D] is another schematic diagrams of the vacuum transfer station with nozzle manifold;
[FIG. 10E] illustrates an exemplary implementation of the vacuum transfer station;
[FIG. 10F] also illustrates the exemplary implementation of the vacuum transfer station;
[FIG. 10G] illustrate an embodiment of the lid with a gasket;
[FIG. 10H] illustrate an embodiment of the lid with a gasket and gasket laminations;
[FIG. 11A] illustrates a corner of the base of the vacuum transfer station having a vacuum tubing connector;
[FIG. 11B] is a similar view of the vacuum transfer station of FIG. 11A, with transparent walls to show an interior vacuum line;
[FIG. 12] illustrates a top view of a vacuum transfer station and vacuum tubing connector arranged with respect to other devices within an apparatus;
[FIG. 13] illustrates a top angled view of a vacuum transfer station and vacuum tubing connector arranged with respect to other devices within an apparatus;
[FIG. 14] is a flowchart for exemplary operation of stations in the instrument of FIG. 3;
[FIG. 15] is a flowchart for a synthesis sub-process;
[FIG. 16] is a flowchart for a nucleotide addition sub-process;
[FIG. 17] is a flowchart for a transfer and liberation sub-process;
[FIG. 18] is a flowchart for a desalting sub-process;
[FIG. 19] is a flowchart for an elution sub-process; and
[FIG. 20] is a flowchart for a quantification and normalization sub-process.

### DETAILED DESCRIPTION OF THE EMBODIMENTS

Embodiments of the present disclosure will now be described more fully hereinafter with reference to the accompanying drawings, in which some, but not all embodiments of the disclosure are shown.

The present disclosure will be better understood with reference to the following definitions. As used herein, the words "a" and "an" and the like carry the meaning of "one or more." It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the words "about," "approximately," or "substantially similar" may be used when describing magnitude and/or position to indicate that the value and/or position described is within a reasonable expected range of values and/or positions. For example, a numeric value may have a value that is +/- 0.1% of the stated value (or range of values), +/- 1% of the stated value (or range of values), +/- 2% of the stated value (or range of values), +/- 5% of the stated value (or range of values), +/- 10% of the stated value (or range of values). Within the description of this disclosure, where a numerical limit or range is stated, the endpoints are included unless stated otherwise. Also, all values and subranges within a numerical limit or range are specifically included as if explicitly written out.

The general principles of the invention are disclosed in more detail herein particularly by way of examples, such as those shown in the drawings and described in detail. It should be understood, however, that the intention is not to limit the invention to the particular embodiments described. The invention is amenable to various modifications and alternative forms, specifics of which are shown for several embodiments. The intention is to cover all modifications, equivalents, and alternatives falling within the principles and scope of the invention. Guidance for selecting materials and components to carry out particular functions may be found in available treatises and references on scientific instrumentation including, but not limited to, Moore et al, Building Scientific Apparatus, Third Edition (Perseus Books, Cambridge, MA); Hermanson, Bioconjugate Techniques, 3rd Edition (Academic Press, 2013); and like references.

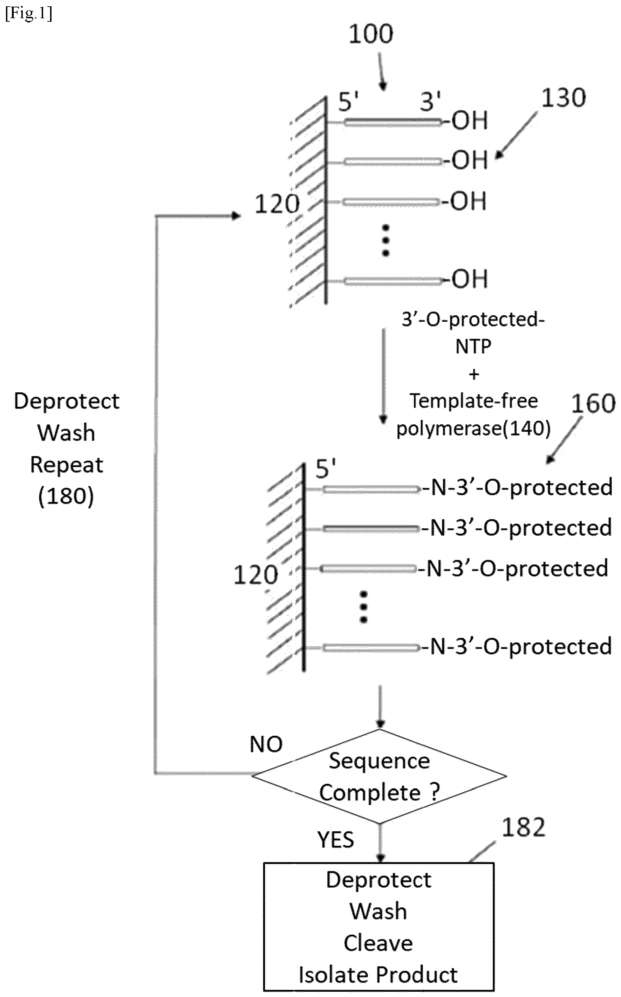

In one aspect, the invention is directed to systems and apparatus for parallel enzymatic synthesis of a plurality of polynucleotides in an array of addressable reaction chambers using a template-free polymerase. That is, systems and apparatus of the invention carry out automatically synthesis of a plurality of polynucleotides using for each polynucleotide the synthesis scheme shown in FIG. 1. Each synthesized polynucleotide or at least some of the synthesized polynucleotides may have a predetermined sequence. It is understood that the term "predetermined" in reference to polynucleotide sequences includes the placement of random sequences at predetermined locations of the whole polynucleotide, e.g. in the synthesis of random sequence tags or barcodes. In some embodiments, systems of the invention comprise apparatus of the invention whose practice comprises the implementation of specific method steps. In some embodiments, systems and apparatus of the invention may further carry out cleavage or release of synthesized polynucleotides from their synthesis supports and isolation of the cleaved or released polynucleotide products. In some embodiments, systems and apparatus of the invention comprise (i) a plurality of reaction wells or reaction chambers, each reaction well being capable of accepting reactants, wash solutions, synthesis supports through an inlet or opening, holding such reactants, wash solutions and synthesis supports for predetermined incubation times, and having such reactants and wash solutions removed through an outlet operationally associated with a filter that retains the synthesis supports, wherein the plurality of reaction chambers are usually provided in a regular, e.g. rectilinear, planar array, (ii) a waste manifold operationally associated with the outlets of the reaction chambers for accepting reactants and wash solutions removed from the reaction chambers whenever a positive pressure differential is established between the reaction chambers and the waste manifold causing fluid in the reaction chambers to flow through the reaction chamber outlet to the waste manifold, (iii) a fluid delivery system for storing and delivering reagents to reaction chambers under the control of a control system, (iv) a user interface for accepting polynucleotide sequences, for example, via direct entry by a user or transmission from another device, e.g. a personal computer, cell phone, or the like, and for displaying process options, recommendations and warnings to a user, (v) a control system for controlling the operation of the fluid delivery system, waste manifold, and reaction chambers to effect polynucleotide synthesis in the reaction chambers, and additionally to collect and store process data, error management, and to implement adaptive processes, i.e., corrective actions, based on process data analysis, and (vi) liquid level sensors also under control of the control system for monitoring fluid removal from reaction wells or reaction chambers during a synthesis cycle and detecting failure to remove fluid or inadequate fluid removal. In some embodiments, apparatus of the invention may further include components for performing a preliminary (i.e. pre-synthesis) polymerase activity assay. Based on the results of the assay, the control system can adjust incubation times and temperature of coupling reactions to optimize yields, or in extreme cases can recommend to a user via the user interface that reagents should be changed. In some embodiments, apparatus and systems of the invention may include elements for cleaving polynucleotide products from their synthesis supports and isolating the cleaved product. These embodiments may vary widely depending on the cleavage mechanism used and the isolation method used. In some embodiments, after cleavage, isolation is accomplished by conventional purification techniques, including gel filtration or adsorption onto silica-based materials, such as glass. Thus, in such embodiments, commercially available polynucleotide purification/isolation plates compatible with synthesis plates (comprising a plurality of reaction chambers) may be employed and positioned by a conventional plate mover or other robotic component of the apparatus. Exemplary commercially available purification/isolation plates are available from Invitek Molecular (Berlin), Enzymax (Lexington, KY), Qiagen (San Diego), or like vendors. Such commercially available purification/isolation plates are typically used in accordance with the manufacturer's recommended protocols. Exemplary plate movers for use in the invention may comprise simple custom made plate-gripping components coupled with movement on a track for transport between stations, or plate movers may comprise commercially available robots, such as Spinnaker Microplate Robot (ThermoFisher), or the like. Such plate mover moves the synthesis plate and/or the polynucleotide purification/isolation plate so that they are in proper relation to one another for cleavage and purification/isolation to take place. In some embodiments, cleaved polynucleotide product can be isolated by chromatography, for example, in embodiments using 96-well synthesis plates, by use of Repligen's OPUS^{®} RoboColumn^{®} plate, or the like, with suitable packing material.

The plurality of reaction chambers in an apparatus of the invention may vary widely. In some embodiments, the plurality may be in the range of from 2 to 10000, or from 2 to 5000, or from 2 to 2000, or from 2 to 500, or from 2 to 100. In other embodiments, the plurality may be in the range of from 100 to 2000, or from 100 to 500. In some embodiments, the plurality of reaction chambers is equal or less than the number of wells in a standard, commercially available multi-well plate, such as a 24-well, 48-well, 96-well, 384-well or 1536-well plate. In some embodiments, the plurality of reaction chambers is the same as or less than the number of reaction chambers, or reaction wells, in a planar array. The lengths of the plurality of polynucleotides synthetized by an apparatus may be the same or different and, in some embodiments, may vary between 10 and 1000 nucleotides. In other embodiments, the lengths of polynucleotides synthesized by systems and apparatus of the invention may vary between 10 and 500 nucleotides, or between 10 and 200 nucleotides, or between 10 and 100 nucleotides.

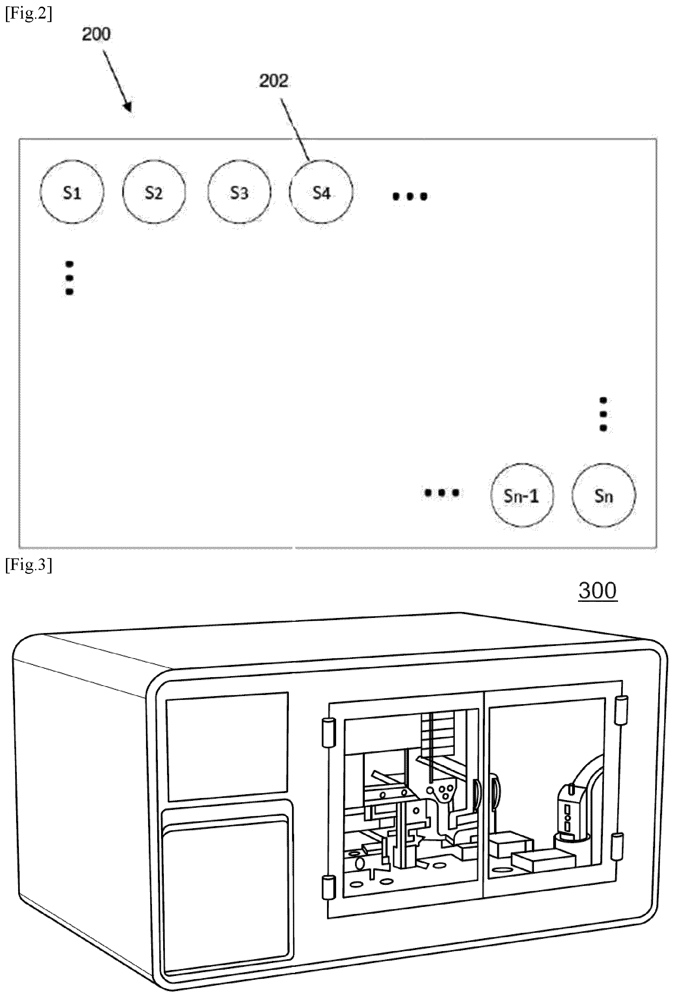

Each reaction chamber of a plurality has an inlet and an outlet and a filter operationally associated with the outlet which is capable of retaining a synthesis support material in the reaction chamber whenever liquid reagents are removed from the reaction chamber through the outlet. In some embodiments, an array of reaction chambers for use with the invention may be a commercially available 24-well, 48-well, 96-well, 384-well or 1536-well filter plate, e.g. available from Pall, Agilent, ThermoFisher, or like companies. In some embodiments, the volume of the reaction chambers may be in the range of from 0.5 µL to 10 mL, or in the range of from 1.0 µL to 5 mL, or in the range of from 2.0 µL to 5 mL, or in the range of from 5 µL to 5 mL, or in the range of from 1.0 µL to 400 µL. Typical working reaction volumes of a reaction chamber are in the range of from 50% to 75% of the reaction chamber volume. In some embodiments, reaction chambers are formed in a planar substrate that comprises a material that is inert to and stable under exposure to the reagents and conditions of the enzymatic synthesis process. Exemplary materials include, but are not limited to, nylon, polypropylene, polystyrene, polytetrafluorethylene (PTFE), polyvinylidene fluoride (PVDF), or the like. FIG. 2 shows an array or plate 200 of reaction chambers (in this case, wells 202) arranged in a rectilinear array, wherein each well in the array or plate is addressable, particularly in the sense that the control system can be programmed to precisely deliver a predetermined reagent to any predetermined well S1, S2 ... Sn in the array. **In** other embodiments, an array of reaction chambers may have different arrangements, such as, hexagonal, concentric, or the like. **In** some embodiments, each different polynucleotide of a plurality is synthesized in a different reaction chamber.

Each reaction chamber contains a synthesis support material that has attached initiators as detailed later in the application onto which monomers are coupled during synthesis. As described more fully below, the type of synthesis support employed with the system and apparatus may vary widely in both size and composition. In some embodiments, synthesis supports may comprise the filter of a reaction chamber. In some embodiments, synthesis supports may be separate from and disposed in the reaction chambers. For example, in some embodiments, synthesis supports are solid particles or beads. Such solid particles or beads may include either nonporous solid particles or beads wherein synthesis occurs on the surface of the synthesis support material, or porous solid particles or beads, such as gel particles or resins, wherein synthesis occurs on both the surface and interior of the synthesis support material. In some embodiments, the plurality of reaction chambers may be in the form of a synthesis plate comprising an array of wells, e.g. in a conventional 96-well or 384-well format, each containing a predetermined quantity of synthesis support with initiators attached. As described more fully below, in some embodiments, such synthesis plates may include synthesis supports disposed in a predetermined volume of viscous humectant solution deposited in the well. The viscous humectant protects synthesis supports in a well from drying out and immobilizes or localizes the supports so that movement within the well is minimized or eliminated. In some embodiments, such synthesis supports are provided to users in vacuum packaged form, for example, vacuum packed in a plastic, mylar, metal foil or other protective material. Appliances for producing such vacuum packaged synthesis plates include such simple device as a Kitchenboss, or like appliances. In some embodiments, humectants are selected from glycerol, alcohol sugars, ethylhexylglycerin, panthenol, sorbitol, xylitol, maltitol, propylene glycol, hexylene glycol, butylene glycol, sodium lactate, hyaluronic acid, polydextrose, or the like. In some embodiments, such humectant have a viscosity equivalent to a glycerol/water solution in the range of 40-60 percent (v/v) glycerol:water. In some embodiments, the humectant is a 50 percent (v/v) glycerol:water solution. As used herein, a "humectant" is any hygroscopic substance that attracts and retains moisture. In some embodiments, synthesis plates may comprise mixtures of two or more humectants or with different humectants in different wells. In some embodiments, either separate from viscous humectants or together with viscous humectants, synthesis supports also may be immobilized or localized in a dissolvable gel, such as, a dissolvable hydrogel, such as, a disulfide-stabilized hydrogel, e.g. Chong et al, Small, 5(22): 2601-2610 (2009); Lu et al, Burns & Trama, 6:35 (2018); Konieczynska et al, Acc Chem Res, 50(2): 151-160); and the like.

The filter associated with a reaction chamber or an array of reaction chambers may be a planar sheet of filter material bonded to, or sealingly attached to, the outlet or outlets of reaction chambers. Typically, the filter is made of a material inert to, and stable under, the reagents and conditions of the enzymatic synthesis process. For example, such filtration membranes may comprise polyethersulfone, polysulfone, cellulose, nylon, polypropylene, cellulose acetate, cellulose nitrate, polytetrafluorethylene (PTFE), glass fiber, polyvinylidene fluoride (PVDF), polyvinyl chloride, acrylic copolymer, aluminum oxide, polyester, and the like. In some embodiments, filter material is, or has been treated to be, hydrophobic, for example, to prevent seepage of aqueous reagents through the filter during incubations. In some embodiments, filters comprise PTFE, PVDF or polypropylene.

Pore size, pore size distribution, pore density, and like characteristics of the filter material of a reaction chamber are selected so that it retains the synthesis support material but permits passage of proteins and other reagents upon application of a pressure differential between the reaction chamber and waste manifold. Thus, in some embodiments, the pore size selected depends in part on the nature of the synthesis support material. In some embodiments, when synthesis supports are conventional solid or gel particles or beads (e.g. > 40 µm diameter), filters having pores with average diameters in the range of 0.1 µm to 10.0 µm may be employed; or in other embodiments, filters having pores with average diameters in the range of 0.1 µm to 1.0 µm may be employed. In some embodiments, commercially available 96-well and 384-well filter plates having 0.45 µm pores or 1.2 µm pores may be used. In some embodiments, filters employed have pore densities ranging from 1 to 106 pores per cm². In some embodiments, for example, in which soluble synthesis supports, such as polymer supports, are employed, nanofiltration may be used. Nanofiltration may be accomplished, for example, using filters having average pore size (or diameters) in the range of from 1 nm to 50 nm, or in the range of from 1 nm to 10 nm.

Apparatus of the invention comprise at least one waste manifold operationally associated with the plurality of reaction chambers and the control systems for simultaneously generating a positive pressure differential between all of the reaction chambers and the waste manifold which causes fluids in the reaction chambers to flow through the filter of the reaction chamber to the waste manifold (and subsequently to a waste container). The positive pressure differential may be generated by the application of a pressure head to the reaction chambers (for example, as described by Skold et al, U.S. patent 5273718) or by the application of a vacuum to the waste manifold chamber (for example, as described by Sindelar et al, Nucleic Acids Research, 23(6): 982-987 (1995)). Exemplary vacuum manifolds for use in the invention include the MilliporeHTS^{™} vacuum manifold, BioTek ELx405^{™} vacuum filtration module, or the like. Exemplary synthesis plates include filter plates for manifolds in either 96-well or 384-well formats. In embodiments employing vacuum, a waste manifold includes vacuum sensors and regulators that permit the intensity of vacuum applied to the reaction chambers to be controlled by the control system. In some embodiments, the waste manifold also includes components for regulating the temperature of the plurality of reaction chambers and a shaker for agitating the reaction mixtures in the reaction chambers. Operational association between the waste manifold and the plurality of reaction chambers includes the establishment of a seal between the substrate comprising the reaction chambers and the waste manifold so that the pressure differential between the waste manifold chamber and reaction chambers may be controlled. Such operational association also includes the timing of instructions generated and sent by the control system to the fluid delivery system and waste manifold for delivery of reagents, determination of incubation times and timing of reagent removal in order to effect the synthesis steps of the enzyme-based process. In some embodiments, such operational association may also include changing temperature, incubation times of reactions depending on measured activities of template-free polymerases. In some embodiments, a waste manifold may include vacuum sensors, vacuum regulators, temperature sensors, and temperature regulating devices to control the temperature of a plate mounted on the manifold. Such sensors and regulators are operationally associated with the control system and may be used by the control system to implement a corrective action whenever liquid level sensors indicated inadequate fluid removal from reaction chambers. Such corrective actions may include increasing the intensity of vacuum applied to the synthesis plate, increasing the duration that vacuum is applied, or both. For conventional 96-well and 384-well filter plates vacuum may be in the range of 100-600 mmHg and vacuum may be applied for a time in the range of from 5-40 sec. Guidance for operating a vacuum manifold for conventional 96-well and 384-well filter plates is found in Goodrich, Tech Note, "Tips for optimizing microplate vacuum filtration results," Rev. 10/26/2011.

A fluid delivery system comprises (i) reservoirs for storing reagents required for carrying out synthesis reactions and, in some embodiments, cleavage reactions and product purification and (ii) components for delivering at the proper time reagents from the reservoirs to the reaction chambers, which may comprise pipette-based delivery or a system of conduits, tubing, connectors, valves, pumps, nozzles, and the like. Fluidic delivery systems may also include temperature sensors at a variety of locations, e.g. reservoirs, valves, nozzles, etc., temperature control elements (e.g. heaters and/or refrigeration units) to maintain reagents at temperatures to maximize their stability and effectiveness, volume level sensor for reservoirs, and the like. Such sensors are operationally associated with the control system and may be used for monitoring for errors or anomalous conditions in the apparatus. A wide variety of fluid delivery apparatus and components may be constructed or adapted for use to carry out the fluid delivery requirements of the invention. Extensive guidance for this purpose is available in the literature of automated chemical synthesis and analysis, e.g. Miertus et al, editors, Combinatorial Chemistry and Technologies: Methods and Applications, Second Edition (CRC Press, 2005); West et al, U.S. patent 9103809; Butendeich et al, J. Laboratory Automation, 18(3): 245-250 (2013); Fluent Automated Workstations (Tecan Group); Tisone et al, U.S. patent 6063339; Cathcart et al, U.S. patent 5443791; Ingenhoven et al, U.S. patent 7529598; Glauser et al, U.S. patent 8580197; Sindalar et al, Nucleic Acids Research, 23(6): 982-987 (1995); Cheng et al, Nucleic Acids Research, 30(18): e93 (2002); Skold et al, U.S. patent 5273718; and the like. In some embodiments, the fluid delivery system of the invention may comprise in part a conventional fluid delivery robot. In other embodiments, apparatus of the invention may comprise in part inkjet fluid delivery systems. In some embodiments, the fluid delivery system may comprise a reagent cartridge, which may be disposable, and which may be conveniently attached or installed in a compatible receiving station of the apparatus. Such cartridges may contain a necessary quantity of reagents to synthesize a predetermined quantity of each of a predetermined number of polynucleotides each having a length below a predetermined maximum. In some embodiments, such predetermined quantity is in the range of from 1 to 1000 pmoles, or from 1 to 800 pmoles. In some embodiments, such predetermined number of polynucleotides is in the range of from 1 to 96, or in the range of from 1 to 384. In some embodiments, such predetermined length is in the range of from 10 to 600 nucleotides, or in the range of from 15 to 200 nucleotides.

In accordance with the above, an apparatus for synthesizing a plurality of polynucleotides may comprise the following elements: (a) an array of a plurality of reaction chambers, each reaction chamber having a synthesis support wherein each reaction chamber has an inlet and an outlet and a filter that retains the synthesis support and that is operationally associated with the outlet so that reaction solutions exiting the reaction chamber pass through the filter; (b) a waste manifold operationally associated with the outlets of the reaction chambers such that reaction solutions are removed from the reaction chambers and enter the waste manifold whenever a positive pressure differential is establish between the reaction chambers and the waste manifold; (c) a fluid delivery system for delivering reaction solutions to the reaction chambers of the array; (d) a user interface for accepting nucleotide sequences of polynucleotides to be synthesized and providing a graphical display of spatially compact glyphs each representing all or one or more portions of a sequence of a polynucleotide wherein such glyphs are arranged in an array in which a relative position of a reaction chamber for a polynucleotide in the array of reaction chambers is the same as a relative position of a glyph of the polynucleotide in the array of glyphs; and (e) a control system operationally associated with the user interface, the array of reaction chambers, the fluid delivery system and the waste manifold, wherein the control system assigns the sequence of each polynucleotide to a reaction chamber for synthesis, and wherein for each reaction chamber, the control system directs repeated steps of: (i) delivering under coupling conditions to the synthesis supports or elongated fragments in each of the reaction chambers a nucleotide monomer to allow each of the synthesis supports or elongated fragments to be elongated by the nucleotide monomer to form an elongated fragment in accordance with the sequence thereof, and (ii) producing a pressure differential between the reaction chambers and the waste manifold to remove uncoupled nucleotide monomers from the reaction chambers. In some embodiments, such glyphs represent all or one or more portions of the sequence as curves or stings of symbols comprising within a defined or bounded area a nested set of closed circles or polygons or a continuous curve, such as a spiral.

Generally, methods of template-free (or equivalently, "template-independent") enzymatic polynucleotide synthesis comprise repeated cycles of steps, such as are illustrated in FIG. 1, in which a predetermined nucleotide is coupled to an initiator or growing chain in each cycle. The general elements of template-free enzymatic synthesis are described in the following references: Ybert et al, International patent publication WO/2015/159023; Ybert et al, International patent publication WO/2017/216472; Hyman, U.S. patent 5436143; Hiatt et al, U.S. patent 5763594; Jensen et al, Biochemistry, 57: 1821-1832 (2018); Mathews et al, Organic & Biomolecular Chemistry, DOI: 0.1039/c6ob01371f(2016); Schmitz et al, Organic Lett., 1(11): 1729-1731 (1999).

Initiator polynucleotides 100 with free 3'-hydroxyl groups 130 are provided, for example, attached to synthesis support 120. As described more fully below, synthesis supports may be soluble supports or solid supports, such as, planar solid surfaces or beads, such as magnetic beads, agarose beads, or the like. To the initiator polynucleotides 100 (or elongated initiator polynucleotides in subsequent cycles) are added a 3'-O-protected-dNTP and a template-free polymerase, such as a terminal deoxynucleotidyltransferase (TdT) or variant thereof (e.g. Ybert et al, WO/2017/216472; Champion et al, WO2019/135007) 140 under conditions effective for the enzymatic incorporation of the 3'-O-protected-dNTP onto the 3' end of the initiator polynucleotides 100 (or elongated initiator polynucleotides). This reaction produces elongated initiator polynucleotides whose 3'-hydroxyls are protected 160. If the elongated sequence is not complete, then another cycle of addition is implemented 180. If the elongated initiator polynucleotide contains a completed sequence, then the 3'-O-protection group may be removed, or deprotected, and the desired sequence may be cleaved from the original initiator polynucleotide 182. Such cleavage may be carried out using any of a variety of single strand cleavage techniques, for example, by inserting a cleavable nucleotide at a predetermined location within the original initiator polynucleotide. An exemplary cleavable nucleotide may be a uracil nucleotide which is cleaved by uracil DNA glycosylase. If the elongated initiator polynucleotide does not contain a completed sequence, then the 3'-O-protection groups are removed to expose free 3'-hydroxyls 130 and the elongated initiator polynucleotides are subjected to another cycle of nucleotide addition and deprotection.

As used herein, an "initiator" (or equivalent terms, such as, "initiating fragment," "initiator nucleic acid," "initiator oligonucleotide," or the like) usually refers to a short oligonucleotide sequence with a free 3'-hydroxyl at its end, which can be further elongated by a template-free polymerase, such as TdT. In some embodiments, the initiating fragment is a DNA initiating fragment. In some alternative embodiments, the initiating fragment is an RNA initiating fragment. In some embodiments, an initiating fragment possesses between 3 and 100 nucleotides, in particular between 3 and 20 nucleotides. In some embodiments, the initiating fragment is single-stranded. In alternative embodiments, the initiating fragment may be double- stranded. In some embodiments, an initiator oligonucleotide may be attached to a synthesis support by its 5'end; and in other embodiments, an initiator oligonucleotide may be attached indirectly to a synthesis support by forming a duplex with a complementary oligonucleotide that is directly attached to the synthesis support, e.g. through a covalent bond. In some embodiments a synthesis support is a solid support which may be a discrete region of a solid planar solid, or may be a bead.

In some embodiments, an initiator may comprise a non-nucleic acid compound having a free hydroxyl to which a TdT may couple a 3'-O-protected dNTP, e.g. Baiga, U.S. patent publications US2019/0078065 and US2019/0078126.

After synthesis is completed, polynucleotides with the desired nucleotide sequence may be released from initiators and the synthesis supports by cleavage.

A wide variety of cleavable linkages or cleavable nucleotides may be used for this purpose. In some embodiments, cleaving the desired polynucleotide leaves a natural free 5'- hydroxyl on a cleaved strand; however, in alternative embodiments, a cleaving step may leave a moiety, e.g. a 5'-phosphate, that may be removed in a subsequent step, e.g. by phosphatase treatment. Cleaving steps may be carried out chemically, thermally, enzymatically or by photochemical methods. In some embodiments, cleavable nucleotides may be nucleotide analogs such as deoxyuridine or 8-oxo-deoxyguanosine that are recognized by specific glycosylases (e.g. uracil deoxyglycosylase followed by endonuclease VIII, and 8-oxoguanine DNA glycosylase, respectively). In some embodiments, cleavage may be accomplished by providing initiators with a deoxyinosine as the penultimate 3' nucleotide, which may be cleaved by endonuclease V at the 3' end of the initiator leaving a 5'-phosphate on the released polynucleotide. In some embodiments, an initiator may contain a terminal uridine so that after synthesis the desired polynucleotide may be cleaved from the initiator by treatment with KOH, or like base. Further methods for cleaving single stranded polynucleotides are disclosed in the following references:
U.S. Pat. Nos. 5,739,386, 5,700,642, 1,783,7660 and 5,830,655; and U.S. Patent Publication Nos. 2003/0186226 and 2004/0106728; and in Urdea and Horn, U.S. patent 5367066.

Returning to FIG. 1, in some embodiments, an ordered sequence of nucleotides is coupled to an initiator nucleic acid using a template-free polymerase, such as TdT, in the presence of 3'-O-protected dNTPs in each synthesis step. In some embodiments, the method of synthesizing an oligonucleotide comprises the steps of (a) providing an initiator having a free 3'-hydroxyl; (b) reacting under extension conditions the initiator or an extension intermediate having a free 3'-hydroxyl with a template-free polymerase in the presence of a 3'- O-protected nucleoside triphosphate to produce a 3'-O-protected extension intermediate; (c) deprotecting the extension intermediate to produce an extension intermediate with a free 3'-hydroxyl; and (d) repeating steps (b) and (c) until the polynucleotide is synthesized. (Sometimes the terms "extension intermediate" or "elongation fragment" or "growing chain" are used interchangeably). In some embodiments, an initiator is provided as an oligonucleotide attached to a solid support, e.g. by its 5' end. The above method may also include washing steps after the reaction, or extension, step, as well as after the de-protecting step. For example, the step of reacting may include a sub-step of removing unincorporated nucleoside triphosphates, e.g. by washing, after a predetermined incubation period, or reaction time. In some embodiments, such predetermined incubation periods or reaction times may be in the range of from 30 seconds to 30 minutes, or from 1 min to 30 min, or from 1 min to 15 min, or from 1 min to 10 min.

In some embodiments, after the synthesis cycles of FIG. 1 are completed, further steps may be performed to cleave the completed polynucleotides from the solid supports and to purify them for applications. Such further steps may be performed either in the reaction chambers of the array or the polynucleotides still attached to the solid supports may be transferred to other reaction vessels for the performance of such further steps. Additionally, some cleavage methods may result in a released product that still requires modification to convert it into a useable product. For example, the "endonuclease V-inosine" cleavage (described below) leaves a 5'-phosphate that must be removed for some applications. Thus, a further step of phosphatase treatment may be required.

In some embodiments, a synthesis cycle may be represented as follows:

### Steps of Synthesis Cycle

| Step | Action | Duration |
|---|---|---|
| (i) | Couple--Remove reaction solution | t₁ |
| (ii) | Deprotect or Deblock-Remove reaction | t₂ |
| (iii) | Wash-Remove wash solution | t₃ |

As shown above, in some embodiments, the coupling reaction solution remains in the reaction chamber and the deblocking solution is simply added to it in step (ii). In some embodiments, a wash step may be performed after the coupling step and before the deprotection step.

FIG. 3 illustrates an exemplary instrument for performing enzymatic polynucleotide synthesis. In an exemplary embodiment, an instrument 300 for performing enzymatic polynucleotide synthesis is configured in an instrument housing of a size that may be placed on a benchtop in a laboratory. In an embodiment, the benchtop arrangement can occupy a footprint that may be comparable to a desktop 3D printer. The exemplary instrument 300 can perform parallel synthesis in synthesis well plates to produce a number of oligonucleotides (oligos) per run, depending on the number of wells. The instrument 300 can automatically perform onboard purification, quantification, and normalization of oligos. Oligos of length 15-60 nt, or greater, can be produced. The exemplary instrument 300 can perform multiple runs in a 24-hour cycle. In some embodiments, the synthesis may be used to create custom DNA, of for example 15 to 30 mers or custom RNA, of for example 15 to 30 mers.

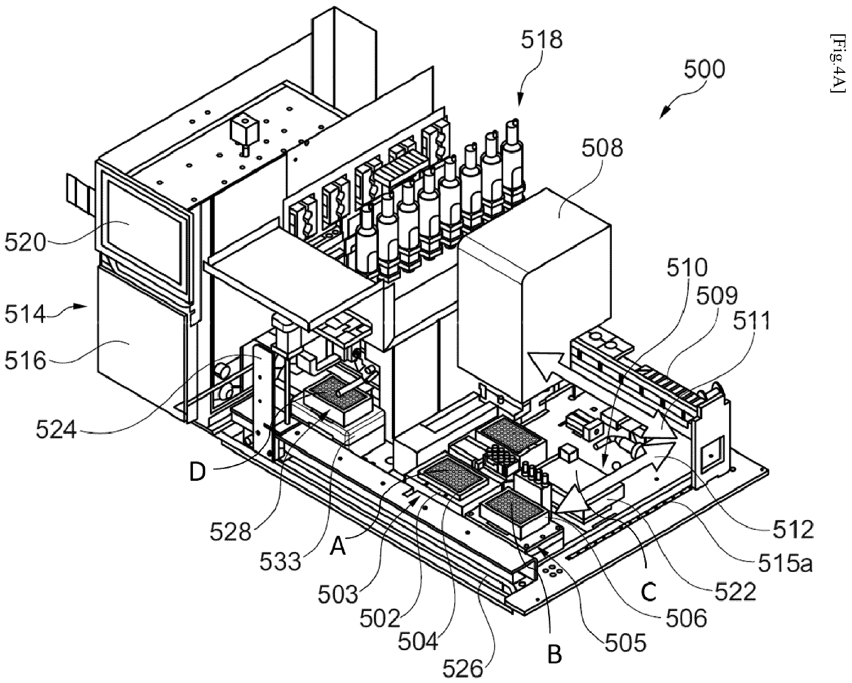

FIG.4A is a schematic diagram of stations within the instrument of FIG. 3. FIG.4A illustrates the arrangement of components in an embodiment of the system 500. Fluid movement and delivery is made through a system of reservoirs, valves and pumps connected to gantry head 508 by flexible lines (made of PTFE (Teflon), or like material), under the control of the control system. Reagent storage cabinet 516 houses coupling reagents, wash reagents, cleavage reagents, elution reagents, and other reagents used in whatever embodiment of the synthesis method is implemented on the system. Fluid from the reagent reservoirs is routed through banks of valves (not shown) and pumps 518 controlled by the control system and delivered to fluid delivery nozzles (not shown) for dispensing into reaction chambers. Such valve banks may include temperature control elements to ensure that reagents are at a predetermined temperature for desired reaction conditions in the reaction chambers.

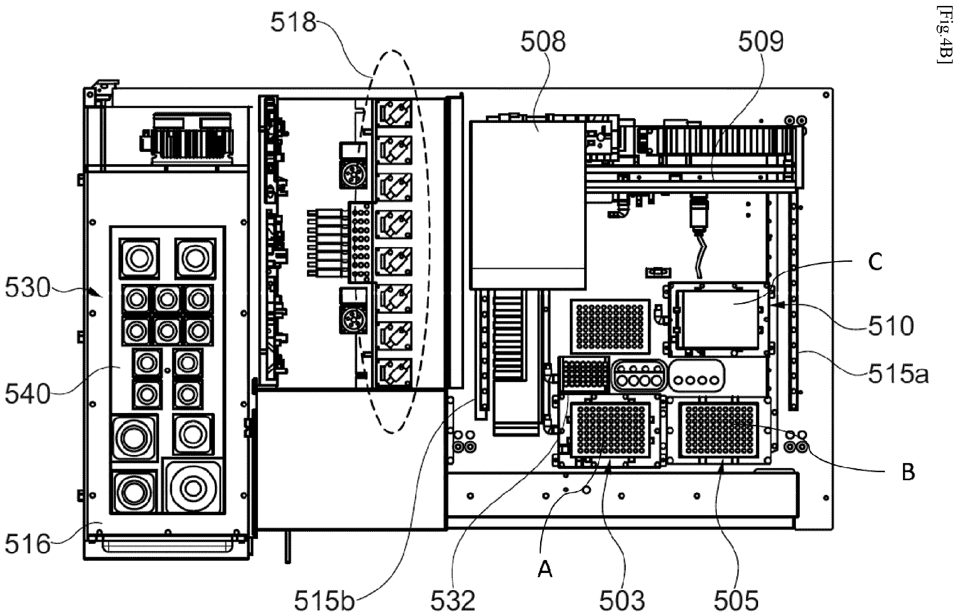

In FIG.4A, station A 503 may be for performing synthesis in a first plate, here a synthesis plate 502 containing a plurality of reaction chambers each containing a synthesis support with initiators. The synthesis plate 502 is mounted on top of waste manifold 504. Adjacent to station A is station B 505 comprising vacuum manifold 506 which in this embodiment is used for releasing isolated or captured polynucleotide product from wells of a second plate, here a purification plate or isolation plate and transfer to a measurement plate (quantification plate) mounted below it on vacuum manifold 506. After entry of the polynucleotide sequences, for example, through user interface touch screen 520, all synthesis cycles are performed in synthesis plate 502 at station A 503 wherein fluid delivery nozzles (not shown) housed in gantry head 508 deliver the coupling reagents, deprotection reagents and wash solutions to the reaction chambers after which liquid level sensors, also housed in gantry head 508, measure liquid levels in each well. Besides reagent delivery nozzles and liquid level sensors, gantry head 508 also houses a 96-pipette bank, or a 384-pipette bank, or greater, for transferring synthesis supports with polynucleotide product to station C 510 and then a cleavage mixture from station C 510 back to station A 503. Gantry head 508 is mounted on gantry 509 and is capable of moving back and forth on gantry 509 as indicated by white arrow 511. Gantry 509 in turn is capable of moving back and forth as indicated by white arrow 512 on tracks 515a and 515b, shown in Fig. 4B, so that gantry head 508 can access stations A 503, B 505 and C 510.

A plate mover 524 can travel along track 526. Plate mover 524 can move the polynucleotide isolation plate to station B 505.

A spectrophotometer or fluorometer (533) measures DNA or RNA concentration or fluorescent emissions. Exemplary spectrophotometer or fluorometer (533) for measuring DNA or RNA concentration or fluorescent emissions is an Epoch microplate spectrophotometer (BioTek Instruments, Inc., Winooski, VT); Tecan infinite 200 (Mannedorf, CH); or like instrument. Such instruments are typically designed for 96-well and 384-well plates.

In other embodiments, station C may be used for pooling synthesis supports from predetermined reaction wells or reaction chambers from a synthesis plate at station A, for example, for increasing final product concentrations of selected polynucleotides. Station C may also be used for pooling polynucleotide products from a synthesis plate for synthesizing random oligonucleotide tags on polynucleotide products using a split-and-mix synthesis strategy.

A top view of apparatus 500 is shown in FIG. 4B. Stations A 503, B 505 and C 510 are shown in relation to gantry head 508 and rails 515a and 515b. Component 532 is a rinse station to which fluid dispense nozzles may be positioned for flushing lines of the fluid delivery system. Reagent bottles or reservoirs 530 are held in a reagent rack 540 located in reagent cabinet 516. Bank of eight pumps 518 are shown mounted between reagent reservoirs 530 and gantry 508.

In some embodiment, the well plate at station A sits on a gasket made of soft. In a more specialized embodiment, instead of only the gasket, there are 3 layers, a rubber gasket lamination on top, a gasket made of soft material in the middle and a thermoplastic gasket lamination below. The rubber gasket lamination ensures that the gasket is not cut by the well plate and the thermoplastic gasket lamination add rigidity to the gasket to avoid any deformation. The thermoplastic gasket lamination is made of polyetherimide.

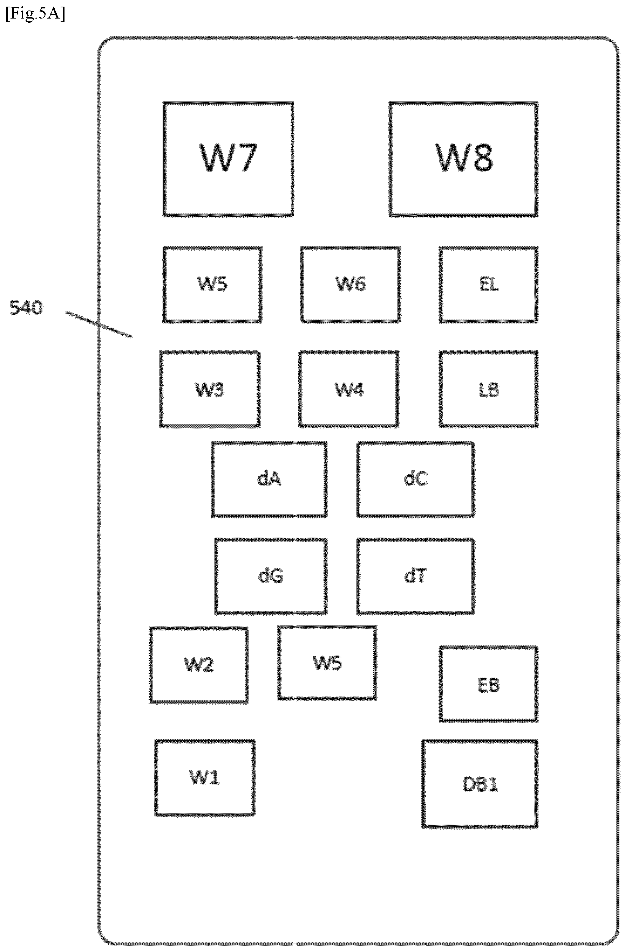

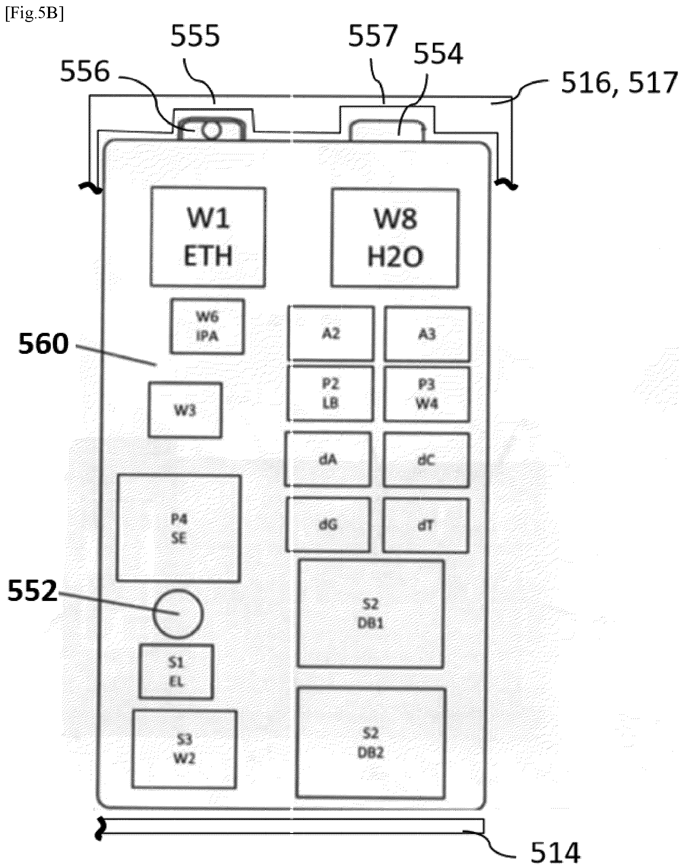

Exemplary reagent racks 540, 560 to accommodate 96 or 384 well plates are shown in FIGs. 5A and 5B, respectively. Reagent bottle/reservoir assignments for the reagent racks are provided in the following table.

| Reagent ID | Reagent Code | Reagent |
|---|---|---|
| dA | dA | dATP |
| dC | dC | dCTP |
| dG | dG | dGTP |
| dT | dT | dTTP |
| EL | S1 | Elongation Buffer w/ Elongation Enzyme |
| DB1 | S2 | Deblock Buffer 1 |
| DB2 | S2 | Deblock Buffer 2 |
| W2 | S3 | Wash 2 Buffer |
| W3 | P1 | Wash 3 / Tris Tween Triton |
| W4 | P3 | Wash 4 / Liberation Wash Buffer |
| LB | P2 | Liberation Buffer w/ Liberation Enzyme |
| W6 | W6 | Wash 6 / isopropyl alcohol |
| W1 | W1 | Wash 1 / 80% Ethanol |
| W7 | W7 | Wash 7 / Detergent |
| W8 | W8 | Wash 8 / Machine Wash |
| EB/SE | P4 | Elution Buffer / Standard Eluant |
| A2 | | Accessory 2 |
| A3 | | Accessory 3 |
| H₂O | H₂O | Water (in vacuum cabinet) |

dATP stands for deoxyadenosine triphosphate. dCTP stands for deoxycytidine triphosphate. dGTP stands for deoxyguanosine triphosphate. dTTP stands deoxythymidine triphosphate.

Regarding FIG. 5B, the reagent rack 560 can include a second deblock buffer bottle DB2 in order to accommodate the 384 wells. In addition, the reagent rack 560 can include positioning tabs 554, 556.

The positioning tabs 554, 556 are for preventing the reagent rack 540, 560 from being inserted into the reagent storage cabinet 516 in a wrong direction, as the reagent rack 560 must be inserted in one direction and secured. To this end, the reagent storage cabinet 516 includes a connection structure into which the positioning tabs 554, 556 can be inserted. The connection structure has openings 555, 557 that match the profile of each positioning tab 554, 556. As such, when the reagent rack 540, 560 is correctly positioned in the reagent storage cabinet 516, the positioning tabs 554, 556 cooperate with the openings 555, 557 so that they are inserted in them. A cabinet door 514 of the reagent storage cabinet 516 can be shut once the positioning tabs 554, 556 have been inserted in the openings 555, 557, as the shutting of this cabinet door 514 is not hindered.

Alternatively, the positioning tabs 554, 556 could be placed on the reagent storage cabinet 516 while the connection structure and its openings 555, 557 are placed on the reagent rack 540, 560. When the positioning tabs 554, 556 are part of the reagent rack 540, 560, they may protrude from an insertion end of this reagent rack 560, the insertion end being the end of the reagent rack which enters the reagent cabinet first when it is correctly mounted, i.e., when it is mounted in a right direction. In such an embodiment, the openings 555, 557 are realized in a wall 517 of the reagent storage cabinet 516 which is opposed to the cabinet door 514. The positioning tabs 554, 556 may protrude from a bottom surface of the reagent rack 540, 560. In a case that the reagent rack 560 is improperly inserted into the reagent storage cabinet 516, the positioning tabs 554, 556 will be facing in an outward direction of the reagent storage cabinet 516, and thereby prevent the cabinet door 514 from properly closing. In such case, the reagent rack 560 must be reinserted in reverse direction so that the reagent rack 560 is secured in place and the cabinet door 514 can be shut. The positioning tabs 554, 556 also serve to secure the reagent rack 560 in position in the reagent storage cabinet 516.

Alternatively, the positioning tabs 554, 556 may protrude from a second end of the reagent rack opposed to the insertion end as previously defined and the openings are then realized in the cabinet door.

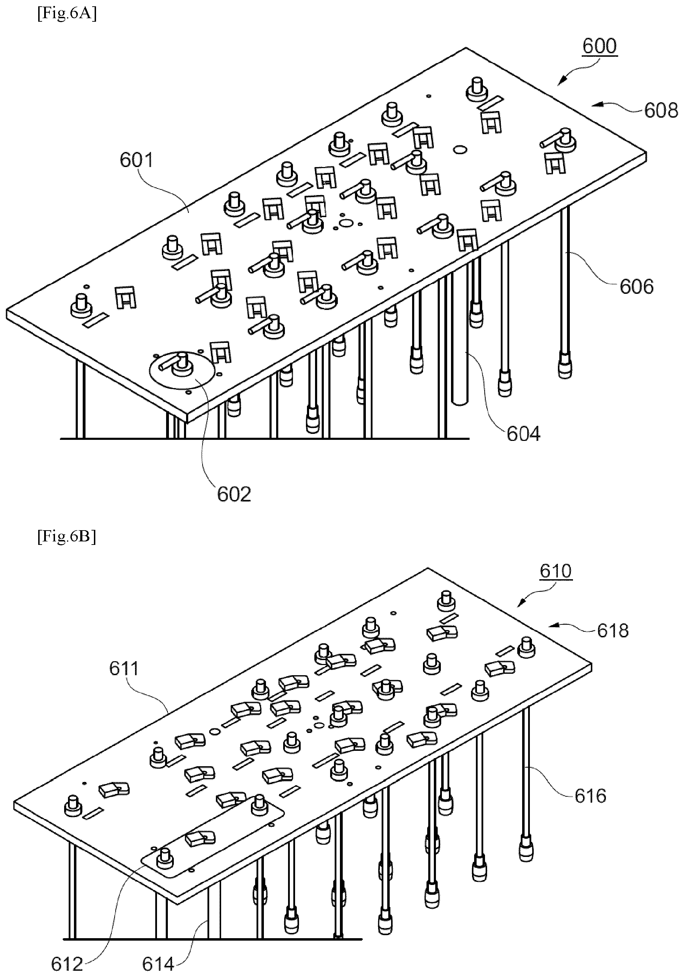

FIG. 6A illustrates an exemplary sipper plate for a 96 well synthesis 600. FIG. 6B illustrates an exemplary sipper plate for a 384 well synthesis 610. Reagents can be drawn from reagent containers positioned in reagent racks 540, 560 using respective sipper plates 600, 610. These sipper plates 600, 610 each comprise a cover plate 601, 611 as well as sipping tubes 606, 616. The cover plate 601, 611 covers the tops of the reagent containers, while the sipping tubes 606, 616 pass through the cover plate to reach each reagent container. Each reservoir or bottle of these reagent containers may thus have stored reagents drawn using a sipping tube 606, 616 arranged in a specific position on the cover plate, providing a one-to-one correspondence between the reservoirs/bottles in the reagent racks 540, 560 and the sipping tubes 606, 616. Each sipping tube 606, 616 passes through an opening in the cover plate 601, 611 which provides support as well as positioning of the tubes 606, 616. According to the disclosure, the sipper plates 600, 610 comprise a plate insert 602, 612 which can be a part of the cover plate 601, 611. Such plate inserts 602, 612 are of a different material and/or color compared to the rest of the cover plate 601, 611.

FIG. 6A shows a plate insert 602 of the sipper plate 600 which covers a single reagent container, while on FIG. 6B the plate insert 612 of the sipper plate 610 is bigger and covers multiple reagent containers. The plate inserts 602, 612 may be in a different material because some reagents require a mechanically stable and chemically inert material such as polyetheretherketone (PEEK), or like material. This is especially true with a deblock buffer, such as sodium acetate. The sipper plate 600 in FIG. 6A thus includes at least one plate insert 602 for covering the bottle containing deblock buffer DB1 that is made from PEEK or the like. Likewise, the sipper plate 610 in FIG. 6B includes at least a larger plate insert 612 for covering more than one bottle, such as two bottles containing deblock buffers DB1, DB2, where the plate insert 612 can be made from PEEK or the like. Most of the other reagents may not require a PEEK material. A remaining portion 608, 618 of the plates 600, 610 may be made of a plastic.

Alternatively or additionally to being made in a different material, the plate insert 602, 612 may be of a different color. As such, labels or inscriptions on the insert plate 602, 612 are easier to read.

In some embodiments, the sipper plate 600, 610 may be placed on the reagent rack 540, 560 in only one position and orientation, due to the position of an alignment post of these sipper plates 600, 610. Such alignment post may extend from the cover plate in the direction of the reagent racks 540, 560. The alignment post can for instance be a protruding rod 604, 614.

As shown of FIG. 5B, the reagent rack 540, 560 can include a receiving structure 552 for this alignment post of the sipper plate 600, 610. This receiving structure 552 of the reagent rack 540, 560 is in a location that allows one orientation of the sipper plate 600, 610. In some embodiments, the receiving structure 552 is positioned off-center on the reagent rack 540, 560, for instance between the reservoir/bottle for the eluant SE and the reservoir/bottle for the elongation buffer EL.

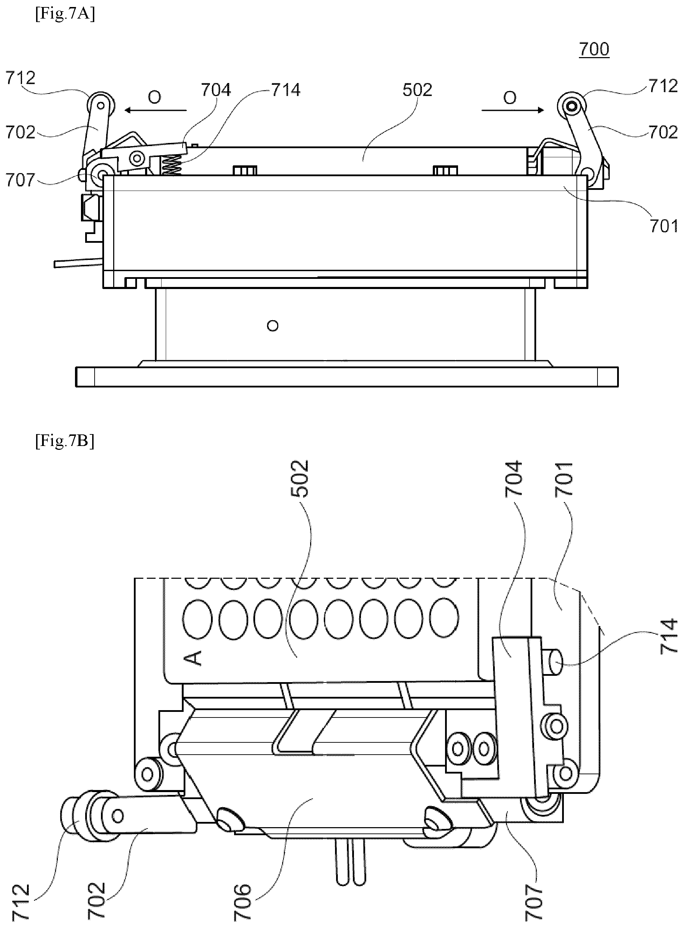

FIGs. 7A, 7B illustrate an exemplary heater-shaker module. As previously mentioned, in some embodiments the waste manifold 504 may include components for regulating the temperature of the plurality of reaction chambers and a shaker for agitating the reaction mixtures in the reaction chambers. Several plates may be mounted on the heater-shaker module 700 throughout the course of polynucleotide synthesis. The plates are more precisely mounted on a well plate holder 701 of the heater-shaker module 700.

Plates, such as synthesis plate 502, purification plate or isolation plate, and quantification plate or measurement plate, may have flaws due to manufacturing defects, such that they may not stay in place in the well plate holder 701 during temperature regulation and agitation operations. In that context, the heater-shaker module 700 of the disclosure is equipped with a clamping mechanism to maintain the plate in the heater-shaker module during such operations. The clamping mechanism can include a pair of clamps 706, a pair of clamp levers 702, and a pair of release latches 704.

The pair of clamps is arranged on the well plate holder 701 such that each clamp 706 is positioned on one longitudinal end of the well plate holder. Each clamp 706 is configured to pivot around a transversal axis, perpendicular to the longitudinal direction, between a locked position wherein the clamp is in in contact with a surface of the synthesis plate, purification plate or quantification plate, and quantification plate or measurement plate disposed in the well plate holder of the heater-shaker module and an unlocked position wherein the clamp is at a distance to such plate to allow the plate mover 524 to displace it. Bearings 707 are disposed at each transversal end of the clamp to realize the rotational mounting.

The clamp levers 702 may be configured with rollers 712 at a tip end. The release latches 704 may be configured with a spring 714 at a spring end of a latch to force the respective latch to hold the clamp 706 in a lock position. Pressing down the latch in the spring-loaded end allows the clamp 706 to be released.

As illustrated in figures 7A and 7B, for each longitudinal end of the well plate holder, a release latch is positioned on a transversal side opposite to the side wherein a lever is positioned. Moreover the pair of levers and the pair of release latches may be located in such a manner that both levers are diagonally opposite one to the other and both release latches are diagonally opposite too.

Plate mover 524 may be a conventional laboratory robot comprising a plate gripper mechanism and a plate transport function, e.g. available from several different manufacturers, such as, Hudson Robotics (NJ), Hamilton Microlab(NV), TPA Motion (SC), Beckman Coulter (CA), or the like. Plate mover 524 can be a general purpose robotic arm or a special purpose plate mover with restricted movement. The plate gripper mechanism is configured to interact with both the release latches 704 and the clamp levers 702.

More particularly the plate gripper mechanism, or robotic arm, presses down on the release latches 704 at the spring-loaded end which results in compressing the corresponding spring 714, in order for the latches to pivot around a transversal axis to release the plate clamp 706.

Simultaneously the plate gripper mechanism, or robotic arm, lift and/or push both levers in an outward longitudinal direction O such that the pair of levers are pushed outwards away from each other in the longitudinal direction. The release latches 704 being in a releasing position, out of the way of the movement of the corresponding clamp 706, the clamps 706 can move to the unlocked position.

In some embodiments, an ultrasonic sensor (not shown) can be used to detect if the clamp 706 is opened or closed. When the clamp 706 is opened, in the unlocked position, the plate mover 524 can place or remove a plate to rearrange plates at stations B 505 and D 528. The rollers 712 can facilitate movement of the plate mover 524 past the clamp levers 702 while placing or removing a plate.

When the appropriate well plate(s) is/are disposed on the well plate holder of the heater-shaker module 700, the plate mover 524, i.e. the robotic arm, first push the pair of levers inwards towards each other in order to close the clamps in the locked position then release the latches by stopping pressing down the spring-loaded end of the release latches. The clamps are now in the locked position, blocked by the release latches and the force of the spring.

As before described, station B 505 comprises a vacuum manifold 506 which is used for releasing isolated or captured polynucleotide product from wells of a purification plate and to transfer to a quantification plate (measurement plate) mounted below it on vacuum manifold 506 in order to control volume transferred. In some embodiments, station B 505 is implemented as a vacuum transfer station. The vacuum transfer station is configured to facilitate transfer of a synthesis plate over a purification plate, and of the purification plate over a quantification plate. In some embodiments, the vacuum transfer station can accommodate a 384 well format as well as a 96 well format.

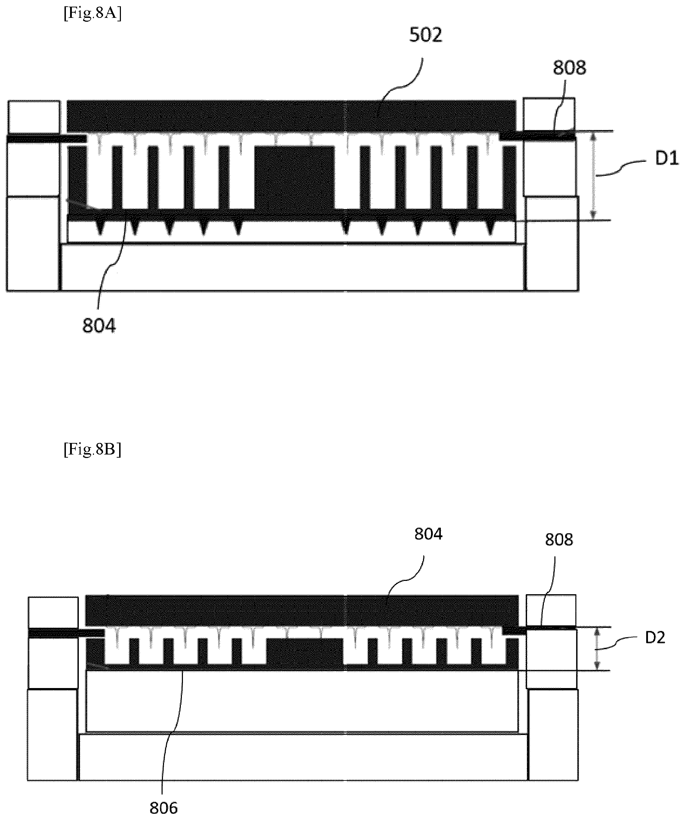

FIGs. 8A, 8B illustrate a predetermined distance between plates in a 96 well format. In one exemplary embodiment, a first predetermined distance D1 between a bottom surface of a synthesis plate 502 and a bottom surface of a purification plate 804 is 40.33 mm. The synthesis plate 502 is placed on a lid 808. A second predetermined distance D2 between a bottom surface of a purification plate 804 and a bottom surface of a quantification plate 806 is 20.08 mm. The purification plate 804 is placed on the lid 808.

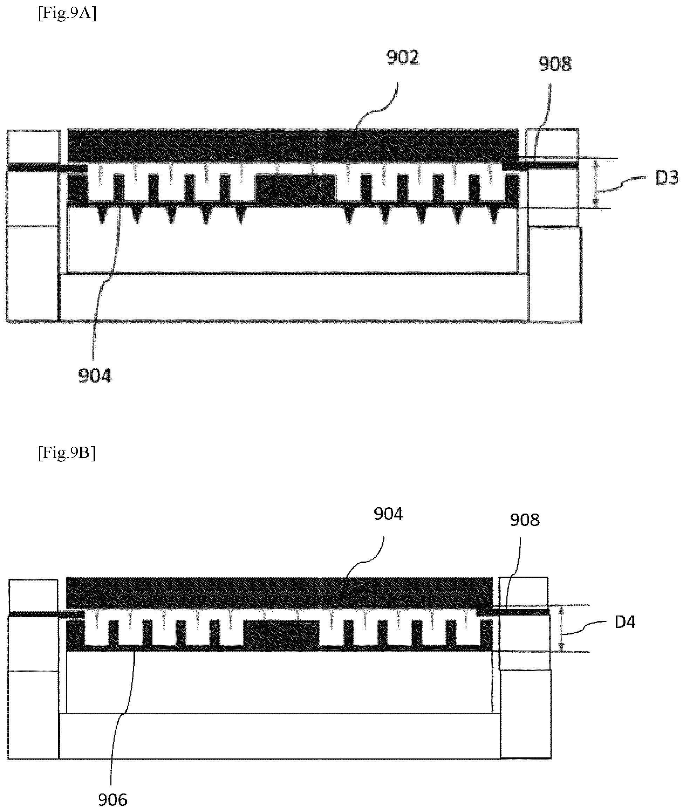

FIGs. 9A and 9B illustrate a predetermined distance between plates in a 384 well format. In an exemplary embodiment, a first predetermined distance D3 between a bottom surface of a synthesis plate 902 and a bottom surface of a purification plate 904 is 16.22 mm. The synthesis plate 902 is placed on a lid 908. A second predetermined distance D4 between a bottom surface of a purification plate 904 and a bottom surface of a quantification plate 906 is 15.50 mm. The purification plate 904 is placed on the lid 908.

A first predetermined distance D1, D3 must be understood as the distance between a synthesis plate and a purification plate whatever the number of wells in such plates. A second predetermined distance D2, D4 must be understood as the distance between a purification plate and a quantification plate whatever the number of wells in such plates.

It results from these measurements that the determined distance between two well plates in the apparatus may be different when the types of the well plates in regard one to each other are different and/or when the number of wells of the well plates of both plates are different.

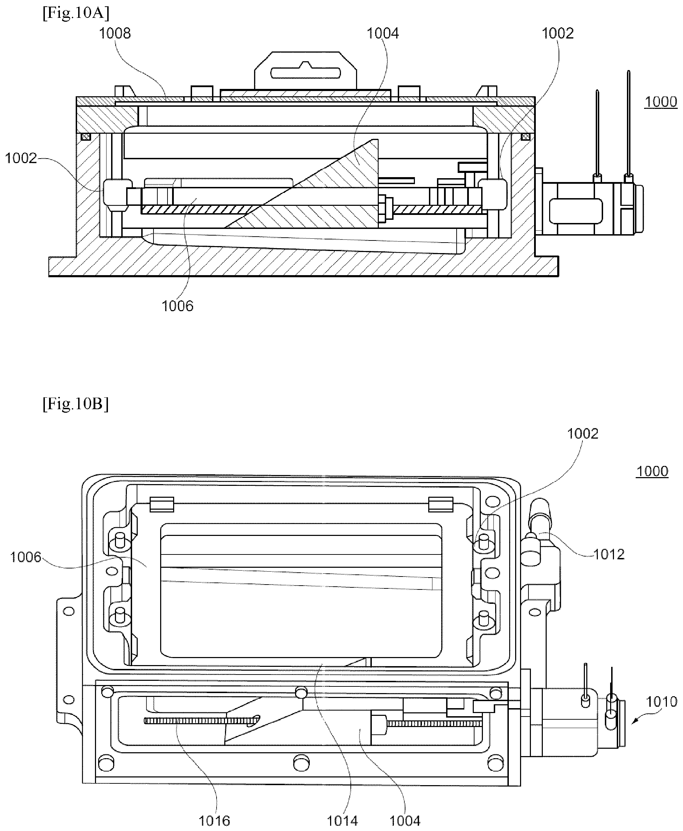

FIGs. 10A and 10B are schematic diagrams of a vacuum transfer station having a wedge-based drive mechanism. The vacuum transfer station 1000 is configured to perform actuation in a vertical direction in order to accommodate for required positioning of various well plates for different well formats. In order to perform vertical actuation in the limited space of station B 505, the vacuum transfer station 1000 is configured with a horizontal actuator 1010 accompanied by a wedge-shaped component 1004 in order to drive a plate lifting platform1006 in a vertical direction. The vacuum transfer station 1000 can include linear bearings 1002 to smoothly guide the plate lifting platform 1006 vertically. In addition, a vacuum line connector 1012 is positioned sideways to minimize clearance to accommodate for adjacent components such as accessory racks.

FIG. 10A shows a side view of the lid 1008. The lid 1008 can be mounted on the vacuum transfer station 1000 and it covers it. It comprises a frame that is sized to mount an upper plate or a first well plate, such as a synthesis plate 502, 902 or a purification plate 804, 904. More precisely, this upper plate may be placed on top of the lid 1008. The lid 1008 is removable by a gripper. When the lid 1008 is removed, a lower plate or a second well plate, such as a purification plate 804, 904 or a quantification plate 806, 906 may be placed inside the vacuum transfer station 1000, on the plate lifting platform 1006. Such placement of the second well plate occurs before the placement of the first well plate. The plate lifting platform 1006 can then raise the second well plate or lower plate to the predetermined distance from the first well plate or upper plate, as shown in FIGs. 8A, 8B, 9A, 9B. Both the lid 1008 and the plate lifting platform 1006 have an opening within the frame structure that is sufficient to allow communication between wells in the upper plate and corresponding wells in the lower plate.

Regarding FIG. 10B, the plate lifting platform 1006 includes a tab 1014 that extends from an edge of the platform 1006 on a side in which the wedge-shaped component 1004 is located. The wedge-shaped component 1004 may be moved horizontally by a screw 1016 that is driven by the horizontal actuator 1010.

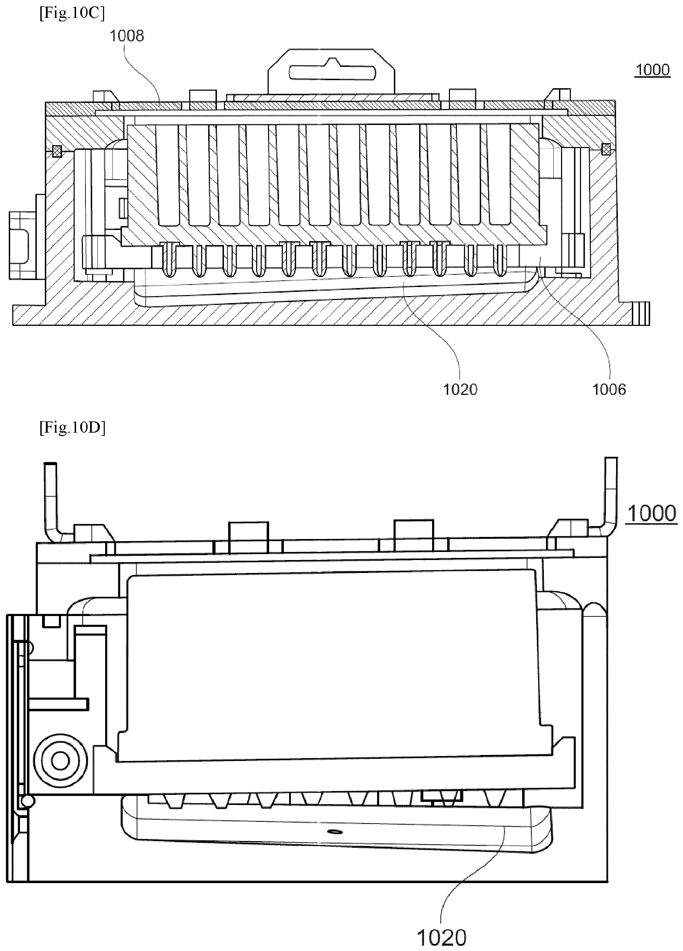

FIGs. 10C, 10D are schematic diagrams of the vacuum transfer station with a nozzle manifold. The vacuum transfer station 1000 includes a drainage section 1020 for removing leakage that may occur from the purification plate. As illustrated in FIG. 10D, the drainage section 1020 may be angled to a back right corner when viewed from the front of the desktop instrument.

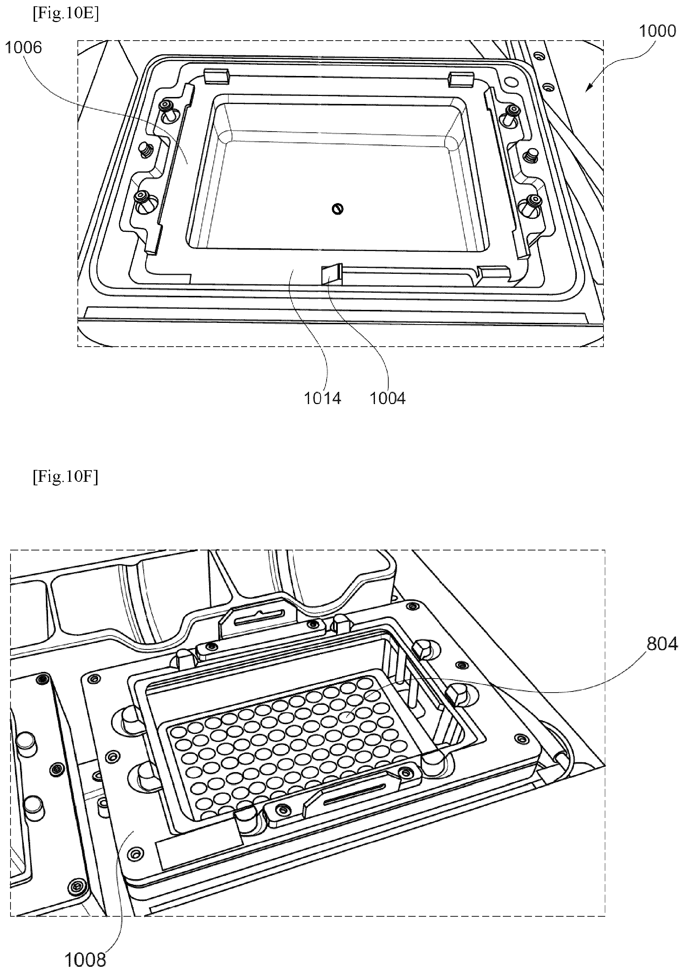

FIGs. 10E, 10F illustrate an exemplary implementation of the vacuum transfer station. FIG. 10E shows the plate lifting platform 1006 in the fully raised position to receive a second well plate or lower plate. Here, the vacuum transfer station 1000 is not equipped with the lid 1008s so as to facilitate the positioning of the lower plate. FIG. 10F illustrates the vacuum transfer station 1000 holding a lower plate 804, 806, 904, 906 in a receded position; the lid 1008 is here mounted on the vacuum transfer station 1000. As such, the lid 1008 is ready to receive the first well plate or upper plate 502, 902, 904, 906.

As mentioned before, in FIG. 10E the plate lifting platform 1006 is in the fully raised position. In such fully raised position, the tab 1014 extending from the side of the plate lifting platform 1006 is in contact with the wedge-shaped component 1004, and more precisely with the diagonal edge of this wedge-shaped component 1004, which is close to a first end of the screw. When the plate lifting platform needs to be in the receded position shown on FIG. 10F, the wedge-shaped component 1004 is close to the second end of the screw, here near the stepper motor. In such a position, the diagonal edge of this wedge-shaped component 1004 may be still in contact with the tab 1014 or located at a distance from this tab 1014. The plate lifting platform 1006 goes from its receded position to its fully raised position by the wedge-shaped component 1004 being moved horizontally; it is thus placed in contact with the tab 1014, which is raised when the wedge-shaped component 1004 slides towards it.

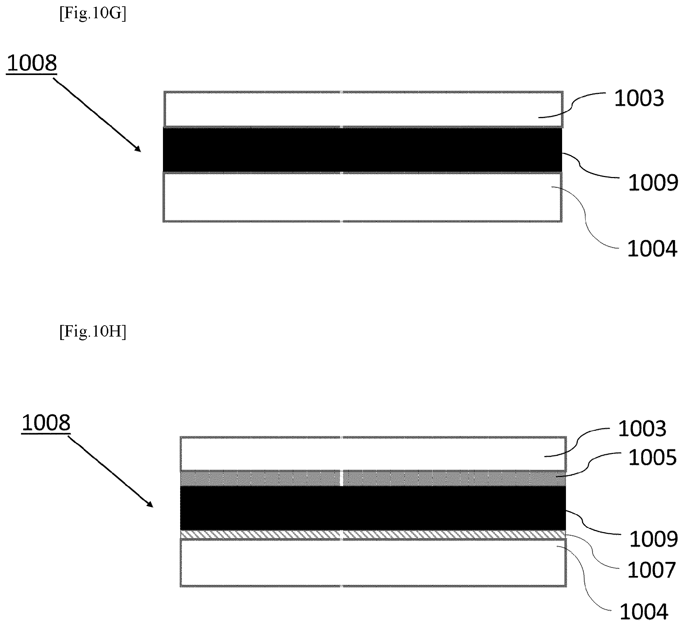

FIG. 10G illustrates an embodiment of the lid 1008 where the lid is composed of two metal plates, a lid upper plate 1003 and a lid lower plate 1004 with a gasket 1009 made of soft material between the two plates.

FIG. 10H illustrates another embodiment of the lid 1008 where the lid is composed of two metal plates, a lid upper plate 1003 and a lid lower plate 1004. Between those two plates, there are 3 layers, a rubber gasket lamination 1005 on top, a gasket 1009 made of soft material in the middle and a thermoplastic gasket lamination 1007 below. The rubber gasket lamination 1005 ensures that the gasket 1009 is not cut by the well plate and the thermoplastic gasket lamination 1007 add rigidity to the gasket 1009 to avoid any deformation. The thermoplastic gasket lamination 1007 is made of polyetherimide.

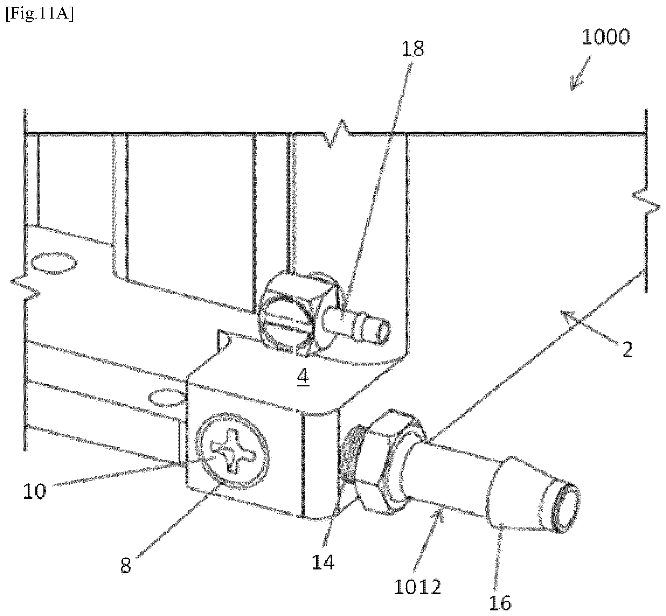

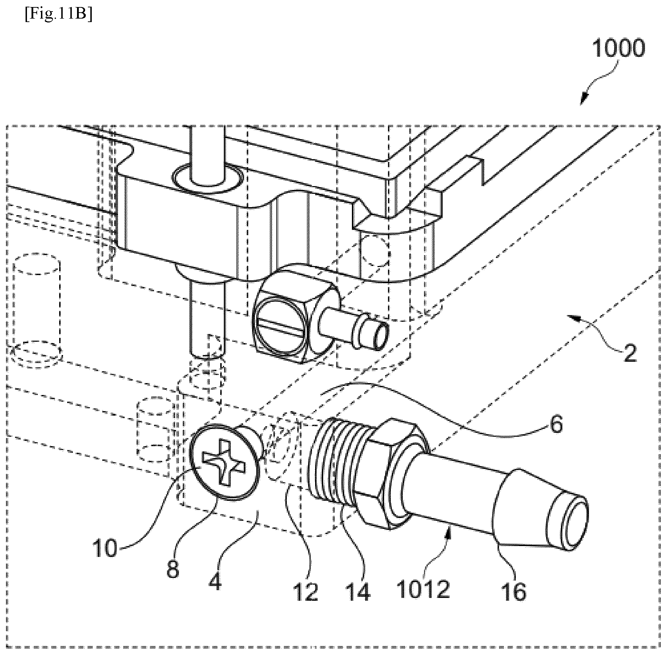

Referring to FIGs. 11-13, the vacuum transfer station 1000 has a rectangular base 2 configured to hold the plurality of reaction chambers. A vacuum nozzle/connector 1012 is connected to a corner 4 of the base and is in fluid communication with a filter side or a sample side of the plurality of reaction chambers when the reaction chambers are held by the base. As previously mentioned, the reaction chambers are carried by a synthesis plate which is inserted in the vacuum transfer station. The vacuum nozzle/connector 1012, or vacuum tubing connector 1012, is arranged on a wall of the rectangular base 2 in such a way as to be fluidically connected to an area between a bottom wall of the rectangular base 2 of the vacuum transfer station 1000 and the means for holding the synthesis plate inserted in the station and on which the reaction chambers are arranged.

The vacuum tubing connector 1012 is elongated in a direction parallel with the shorter or longer of the two lateral dimensions of the base and he has a length determined to allow the connection of a vacuum tubing fitted around the connector without preventing the installation of the other components of the apparatus for enzymatic synthesis 500. In some embodiments, the vacuum tubing connector has a length from the corner to an end in a range of 1-5 cm, 1.5-4 cm, 1.8-3.5 cm, 2-3 cm, or 1.5-2.5 cm.

As shown in Figs. 11A and 11B, the vacuum tubing connector is laterally offset with respect to the wall parallel to its elongation axis thanks to the corner that protrudes from a side of the base. In some embodiments, the corner 4 protrudes 0.5-4 cm, 0.7-3.5 cm, 0.8-3.0 cm, 1.0-2.5 cm, 1.0-2.0 cm, or 1.0-1.5 cm from a side of the base. The bottom of the protruding corner and the bottom of the base are in the same geometric plane. In some embodiments, the corner that protrudes has a height in a range of 1-4 cm, 1.2-3.8 cm, 1.5-3. cm, 1.6-3 cm, or 1.7-2.5 cm.

The vacuum tubing connector 1012 is in fluid communication with an interior fluid line 6 extending in the base as shown in Fig 11B. The interior fluid line may have an inner diameter in a range of 0.1-2 cm, 0.2-1.8 cm, 0.3-1.5 cm, 0.4-1.2 cm, 0.5-1.0 cm, or 0.6-0.8 cm.

The interior fluid line 6 forms a substantially perpendicular angle with an elongation direction of the vacuum tubing connector 1012. An example of this embodiment is shown in Fig. 11B. As used herein, the term "substantially perpendicular" refers to an angle in a range of 80°-100°, 85°-95°, preferably 87°-93°.

The interior fluid line 6 comprises a first segment substantially perpendicular to an elongation direction of the vacuum tubing connector, the first segment extending to the same corner as the vacuum tubing connector between a first aperture 8 at the corner of the base, as shown, for example, in Fig. 11B, and an opening to an internal volume of the base of the vacuum transfer station 1000.

A removably attached stopper fluidly may seal the first aperture 8. Such stopper may be a screw 10.

The interior fluid line comprises further a second segment arranged in the axial extension of the vacuum tubing connector 1012 and forming a second aperture 12 at the corner of the base in which the vacuum tubing connector is removably attached. In a further embodiment, the first aperture 8 and the second aperture 12 have equivalent geometry. For instance, a single vacuum tubing connector may be removably attached from either aperture.

The vacuum tubing connector 1012 is here removably attached to the base by a screw thread mechanism 14. The vacuum tubing connector may comprise an O-ring or some other elastomeric fitting to provide a seal between the nozzle and the base. Alternatively, the vacuum tubing connector may be connected to the base by an unthreaded fitting that may be secured and sealed by a clip, a lever, a washer, a spring-loaded latch, and/or an O-ring. The connection may involve a ball-lock coupling, a roller-lock coupling, a pin-lock coupling, a flat-face coupling, a bayonet coupling, a ring-lock coupling, a cam-lock coupling, or some other structure.

The interior fluid line and the vacuum tubing connector may each have an inner diameter independently in a range of 0.2-2 cm, 0.3-1 cm, or 0.4-8 cm. The fluid line and vacuum tubing connector may accommodate flow rates of up to 20 mL/min, preferably up to 30 mL/min, more preferably up to 40 mL/min, and pressures up to 50 kPa, preferably up to 70 kPa, more preferably up to 90 kPa. In some embodiments, the nozzle and/or interior fluid line comprises a filter in a fluid path in order to prevent debris from entering a vacuum tubing connected to the vacuum tubing connector.

In some embodiments, the vacuum tubing connector is configured to attach to an elastomeric vacuum tubing by press fit coupling. The vacuum tubing comprises an elastomeric compound, which may include natural rubber, polyisoprene (for example, cis-1,4-polyisoprene natural rubber and trans-1,4-polyisoprene gutta-percha), synthetic polyisoprene, polybutadiene, chloroprene rubber (for example, polychloroprene, NEOPRENE, BAYPREN), butyl rubber (copolymer of isobutylene and isoprene), halogenated butyl rubbers, styrene-butadiene rubber, nitrile rubber (copolymer of butadiene and acrylonitrile), hydrogenated nitrile rubbers (for example, THERBAN and ZETPOL), ethylene propylene rubber (a copolymer of ethylene and propylene), ethylene propylene diene rubber (a terpolymer of ethylene, propylene, and a diene-component), epichlorohydrin rubber, polyacrylic rubber, silicone rubber, fluorosilicone rubber, fluoroelastomers (for example, VITON, TECNOFLON, FLUOREL, AFLAS, and DAI-EL), perfluoroelastomers (for example, TECNOFLON PFR, KALREZ, CHEMRAZ, and PERLAST), polyether block amides, chlorosulfonated polyethylene (for example, HYPALON), ethylene-vinyl acetate, thermoplastic elastomers, resilin, elastin, polysulfide rubber, elastolefin, and combinations thereof.

In some embodiments, at least 80%, at least 82%, at least 85%, at least 87%, or at least 90% of the length of the vacuum tubing connector adjacent to the end of the vacuum tubing connector is rotationally symmetric. In some embodiments, at least 98% or 100% of the length of the vacuum tubing connector is rotationally symmetric.

In a further embodiment, a third of the length of the vacuum tubing connector adjacent to the end of the vacuum tubing connector has an outer diameter 16 that is 5-20% greater, 7-18% greater, or 10-15% greater than an outer diameter of the vacuum tubing connector located in a middle third of its length. This is shown in the vacuum tubing connector 1012 in Figs. 11A, 11B. This difference in diameter may provide a stronger frictional coupling to an elastomeric tubing on the nozzle. In a further embodiment, this difference in diameter may allow for a stronger attachment of a tubing when using a cable tie, because the cable tie will more forcefully abut the tied circumference against the larger diameter.

The vacuum tubing connector may be made of a biocompatible metal, such as stainless steel, aluminum, cobalt, zirconium, titanium, or some other metal. Alternatively, non-metals may be used in the nozzle such as polylactic acid (PLA), poly(lactic-co-glycolic acid) (PLGA), polyvinylchloride (PVC), polyethylene terephthalate (PET), acrylonitrile butadiene styrene (ABS), polypropylene (PP), polystyrene (PS), polytetrafluoroethylene (PTFE), polyetheretherketone (PEEK), polyetherketoneketone (PEKK), polycarbonate (PC), glass, carbon fiber, and/or ceramic.

In some embodiments, the vacuum transfer station also has a tubing connector 18 vertically offset from the vacuum tubing connector and extending in a direction substantially parallel to an extension direction of the vacuum tubing connector 1012. The tubing connector 18 may be used to provide a pressure differential to a different area of the vacuum transfer system or may be used to allow airflow from a region within the vacuum transfer system.

The tubing connector 18 is disposed in the vicinity of the vacuum tubing connector 1012. In the embodiment shown in Fig. 11A, the tubing connector is connected directly in a wall delimiting the base of the vacuum tubing connector 1012 without protruding bloc. In other words, the tubing connector 18 is here at a distance from the protruding corner 4 from which the vacuum tubing connector 1012 extends. Alternatively, the tubing connector may be fixed to a top surface of the protruding corner 4.

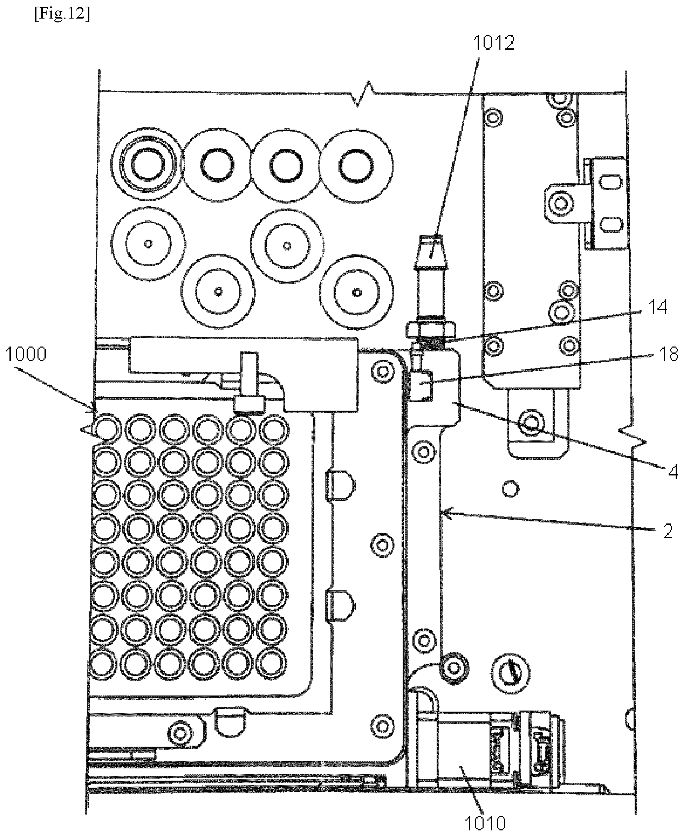

As shown in Fig. 12, the tubing connector 18 has a length smaller than the length of the vacuum tubing connector 1012: the risk to interfere with other components of an apparatus for enzymatic synthesis located around the vacuum transfer station is low with the tubing connector 18 such there is no need to laterally shift the tubing connector 18 as much as the vacuum tubing connector 1012.

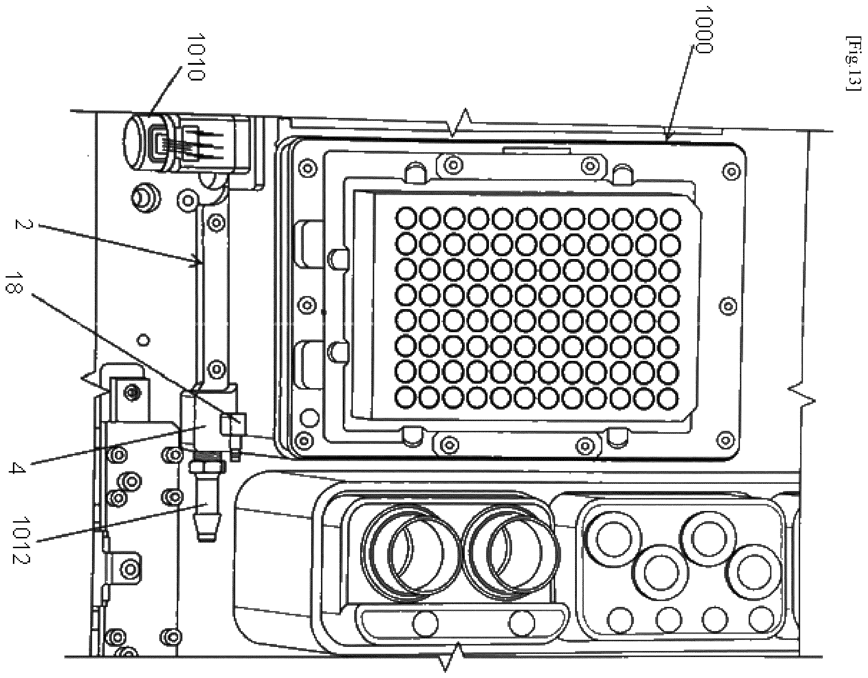

As shown in Figs. 10B and 13, the configuration of the vacuum tubing connector 1012 to a corner of the vacuum transfer station base may allow for the horizontal actuator 1010 and the wedge-shaped component 1004, previously mentioned to drive a plate lifting platform of the vacuum transfer station in a vertical direction, to be positioned along an opposing length of the base. Depending on the apparatus using the vacuum transfer station 1000, the position of the vacuum tubing connector 1012 may allow for a compact arrangement of other devices and structures around the vacuum transfer station, as shown in Figs. 12 and 13.

Figs. 10C and 10D illustrate an embodiment wherein an interior bottom surface or drainage section 1020 of the vacuum transfer station may be tilted in the direction of the corner where the vacuum tubing connector is attached. During a vacuum transfer that produces a waste solution, with the drainage section 1020 underneath the plurality of reaction chambers, the waste solution may collect on this interior bottom surface and flow through an aperture into the interior vacuum line.

According to a different aspect, the present disclosure relates to a method for enzymatic polynucleotide synthesis using an automated apparatus 500 comprising the vacuum transfer station 1000 of the invention. The method involves initiating a control system of the apparatus to begin a polynucleotide synthesis process. This polynucleotide synthesis has at least one step of removing a volume of waste eluent from a plurality of reaction chambers placed on or within the vacuum transfer station by application of a pressure differential through the vacuum tubing connector 1012.

Referring to FIG. 4A, the operation of the basic elements of one embodiment of the invention includes performing enzymatic synthesis of polynucleotides on solid supports within filter plate wells, cleavage of the polynucleotide products from the solid supports and purification/isolation of polynucleotide products from the cleavage reaction components. In this disclosure, purification/isolation may include a desalting step. Synthesis plate 502, 902 includes a plurality of reaction chambers or wells and synthesis is performed while mounted on waste manifold 504. Inlets of reaction chambers are well openings on top of synthesis plate 502, 902. Outlets and filters are on the bottom of synthesis plate 502, 902. Synthesis plate 502, 902 in operation is sealingly attached to waste manifold 504 (for example by clamping) so that whenever a vacuum is applied through a vacuum line to chamber of waste manifold 504 fluids (reagents, wash solutions and the like) are drawn from reaction chambers through the filter material and outlet into a waste manifold chamber and then into waste repository. Synthesis plate 502, 902 containing the plurality reaction chambers may be a conventional filter plate in 24- well, 48-well 96-well, 384-well, 1536-well, or similar formats, for example, available from commercial manufacturers, such as, Pall Corp., Port Washington, NY. Reaction volumes typical for such filter plates may be employed with the invention, e.g. 10-50 µL for 96-well plates, 3-10 µL for 384-well plates, 0.5-3.0 µL for 1536-well plates. Fluid delivery system delivers reagents to reaction chambers of synthesis plate 502, 902 through a system of pumps and valves 518 under control of a control system and delivery nozzles (not shown) located in fluid delivery and sensor gantry 508 also under control of the control system. Liquid delivery nozzles in gantry 508 receive reagents from valve and pump system 518 through flexible lines which allow gantry 508 to move over synthesis plate 502, 902. In other embodiments, gantry 508 may have a capability to move to different stations at different locations in the apparatus, for example, for carrying out reactions in additional reaction plates associated with additional waste manifolds. In addition, in some embodiments, synthesis plate 502, 902 may be moveable with respect to gantry 508. Gantry 508 may be moveable in x, y, and z directions relative to the surface of synthesis plate 502, 902 (as indicated in Fig. 4A by the white arrows), or synthesis plate 502, 902 may be moveable in the x and y directions also, or both elements may be moveable with respect to one another in the x and y directions.

In some embodiments, liquid level sensors (not shown) are located in the fluid delivery and sensor gantry 508. In some embodiments, liquid level sensors simply confirm liquid levels in reaction chambers immediately after nozzles in gantry 508 deliver predetermined amounts of fluid to the reaction chambers (which may be coupling reagent, deprotection reagent (Deblock), wash solutions, cleavage reagent (Liberation Buffer) or purification reagent (desalt)). As described more fully below, purification/isolation of cleaved polynucleotide products can be accomplished by a variety of techniques. Each of such techniques may require different reagents for implementation, which are referred to herein as "purification reagents." For example, some techniques require precipitation of the polynucleotide products which may be accomplished with the purification reagent, isopropanol. Another purification reagent may be water or a Tris EDTA (TE) buffer, which may be used to elute an adsorbed DNA precipitate or an adsorbed RNA precipitate from a silica adsorbent. In some embodiments, liquid level measurement may occur after the completion of reagent delivery to all of the reaction chambers, or detection may occur at the same time as when fluid delivery is occurring but at different reaction chambers. For example, in some embodiments, the number and positions of liquid level sensors and the number and positions of fluid delivery nozzles in gantry 508 permit them to be positioned simultaneously over different groups of reaction chambers of the same synthesis plate. In some embodiments, a separate step in the synthesis process may be implemented wherein the liquid level sensors measure the rate of fluid removal in a portion of the reaction chambers while vacuum is applied to remove fluid. In such embodiments, within a cycle multiple measurements of fluid levels are made in each reaction chamber undergoing evacuation so that a rate of fluid removal can be computed. If the rate falls below a predetermined level, control system can actuate a corrective action, such as, flagging the reaction chambers with evacuation rates below the predetermined level and discontinuing fluid delivery to them, or actuate other remedial actions described below.

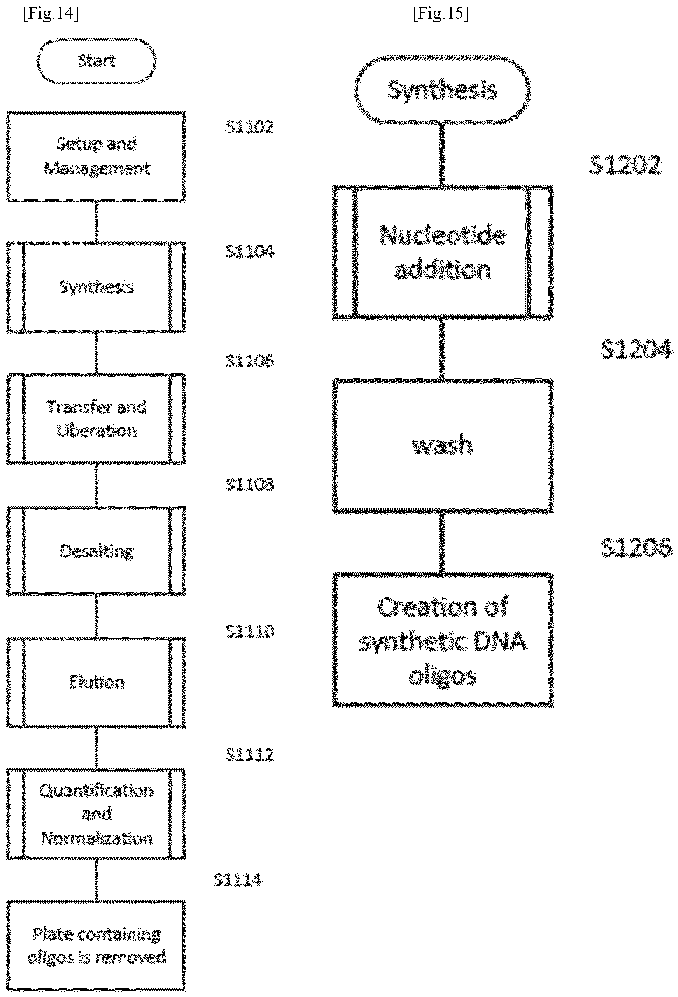

FIG. 14 is a flowchart of exemplary steps in the operation of stations in the instrument of FIGs. 3, 4A, 4B. In S1102, the user initiates setup and management of a run. In S1104, synthetic polynucleotides are created based on information provided during setup and management. In S1106, samples are transferred and oligos are cleaved/liberated from the synthesis resin. In S1108, oligos are purified/desalted. In S1110, oligos are transferred to a quantification (measurement) plate. In S1112, oligos are analyzed and normalized to a desired concentration. In S1114, the plate containing oligos is removed by the user. A report for the created oligos may be provided to the user.

FIG. 15 is a flowchart for an exemplary synthesis sub-process. As in the above, an automated polynucleotide synthesis process is performed through repeated cycles of, S1202, nucleotide addition and, S1204, washes to, S1206, create synthetic polynucleotides of a sequence and sequence length that were predetermined in the setup step S1102.

In some embodiments, under control of a control system, the above elements carry out a predetermined number of cycles of synthesis steps for each of the plurality of polynucleotides. Control system implements repeated steps of: (i: fluidic addition) actuating fluid delivery system to deliver under coupling conditions to the initiators or deprotected elongated fragments in reaction chambers a 3'-O-protected nucleoside triphosphate and a template-free polymerase (depending on the sequence of the polynucleotide), (heating in Heater-shaker module (700)) wherein the coupling conditions include a predetermined coupling incubation time and incubation temperature to allow initiator oligonucleotides or deprotected elongated fragments to be elongated by the 3'-O-protected nucleoside triphosphate to form 3'-O-protected elongated fragments; (ii: fluidic addition) actuating fluid delivery system to deliver deprotection solution (Deblock Buffer) to the reaction chambers so that the 3'-O-protected elongated fragments are deprotected; and (iii) actuating waste manifold 504 to generate a pressure differential between reaction chambers and waste manifold 504 to remove deprotection solution (Deblock Buffer) from reaction chambers at a predetermined rate (for example, as determined by the magnitude of the pressure differential). In some embodiments, a differential pressure may be obtained by applying a vacuum through waste manifold 504 to "pull" fluid from the reaction chambers or by applying a positive pressure at the inlets of the reaction chambers to "push" fluid from the reaction chambers, or both. For embodiments employing conventional 96-well synthesis plates, typically vacuum is applied for 10-30 seconds to evacuate fluids from the wells. In some embodiments, such as those employing 96-well plates, a predetermined rate of fluid removal may be in the range of from 1 to 100 µL/sec, or in the range of from 1 to 50 µL/sec, or in the range of from 0.5 to 30 µL/sec.

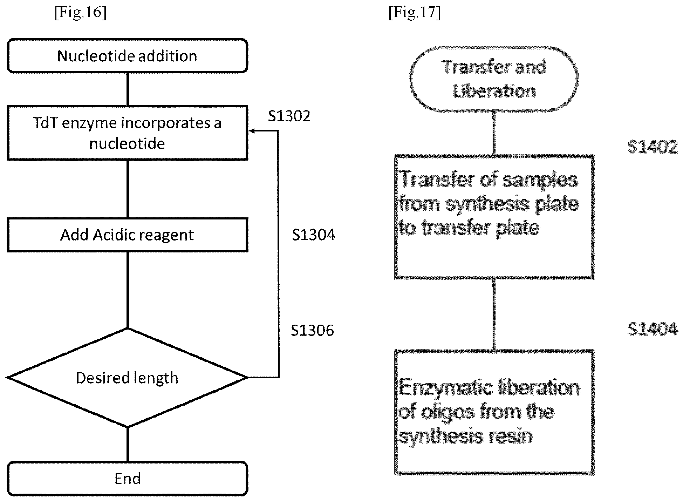

FIG. 16 is a flowchart for an exemplary nucleotide addition sub-process. In S1302, a TdT enzyme incorporates a nucleotide. In S1304, an acidic reagent is added as a deblock buffer. In S1306, a check is made such that the nucleotide addition is repeatedly performed to obtain an oligo of a predetermined length.

FIG. 17 is a flowchart for an exemplary transfer and liberation sub-process. After polynucleotides are synthesized in synthesis plate 502,902, system and apparatus of Fig. 4A carries out steps of cleaving the polynucleotide products from their synthesis supports and isolating the cleaved polynucleotide product from the cleavage reaction mixture. Synthesis plate 502,902 is sealingly mounted on waste manifold 504 so that whenever vacuum is applied fluid in reaction chambers is removed via waste manifold 504. In some embodiments, cleavage takes place in reaction chambers and purification/isolation takes place in polynucleotide purification plate 804, 904. Polynucleotide purification plate is selected or designed so that purification chambers or wells spatially align with reaction chambers of synthesis plate 502, 902.

After synthesis, the apparatus employs a robotic device to place the polynucleotide purification plate 804, 904 beneath synthesis plate 502, 902 such that both synthesis plate 502, 902 and polynucleotide purification plate 804, 904 are sealingly mounted on waste manifold 504. As noted below, the cleavage and purification/isolation steps may be implemented in a wide variety of ways, each of which may call for slightly different apparatus components which are readily provided by those with skill in the art. In some embodiments, in S1402, cleavage may be implemented in synthesis plate 502, 902, reaction mixtures of each chamber of plate 502, 902 may then be pipetted to a purification plate at a different location and polynucleotide purification/isolation may be implemented at the different location or station. In some embodiments, polynucleotide purification/isolation is performed in station B. In some embodiments, at station A 503, synthesis supports with polynucleotide product attached are transferred by pipettes S1402 (e.g. a 96-pipette bank for a 96-well synthesis plate, a 384-pipette bank for a 384-well synthesis plate) to separate station C 510 where a cleavage reaction (Liberation, S1404) takes place.

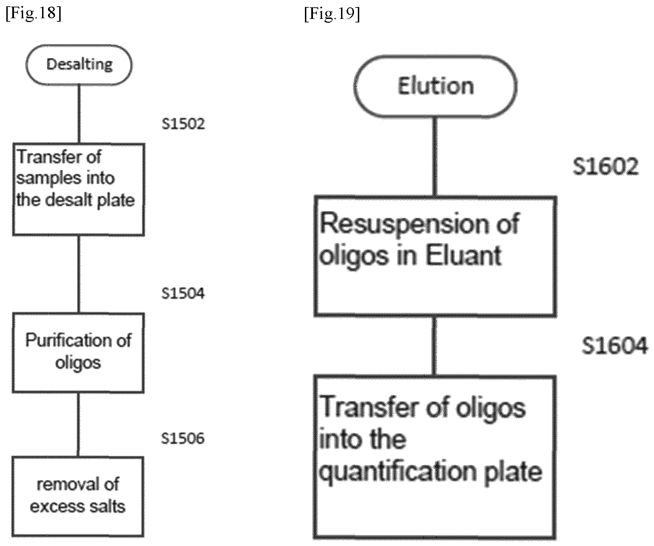

FIG. 18 is a flowchart for an exemplary purification sub-process. Purification in different plates at different stations within the apparatus may (for example) provide better yields or other advantages depending on the particular polynucleotide purification protocol employed. In some embodiments, purification in polynucleotides purification plate 804, 904 may be based on the isolation technique developed by Boom et al, U.S. patent 5234809, wherein, in S1504, cleaved polynucleotides are precipitated with isopropanol and adsorbed onto a silica compound, such as glass. In such embodiments, after cleavage isopropanol is delivered to reaction chambers and incubated, then, in S1502, mild vacuum is applied to transfer the reaction mixture of each reaction chamber to a purification chamber immediate below it in polynucleotides purification plate 804, 904.

In some embodiments, plate mover 524 on track 526 under control of a control system grabs synthesis plate 502, 902 on waste manifold at station A 503 and places it on top of polynucleotide purification plate 804, 904 at station B 505. During placement of synthesis plate 502, 902 and placement of purification plate 804, 904, the plate lifting platform is moved vertically in order to position the purification plate 804, 904 at a predetermined distance from the synthesis plate 502, 902. As described above, the plate gripper mechanism of the plate mover 524 is configured to open the plate clamp 706 up by lifting and pushing clamp levers 702 in an outward direction O. The plate gripper mechanism then can press down on the latches 704 at the spring end to release the clamp 706. In some embodiments, plate mover 524 grabs both synthesis plate 502, 902 and purification plate 804, 904 from station B 505 and places both plates back on waste manifold 504 at station A 503, where cleavage S1106 (liberation) and purification/isolation S1108 steps are performed. The plates are held in place by plate clamp 706. Referring to Fig. 4A, gantry 508 delivers cleavage reagents to reaction chambers of synthesis plate 502, 902 and, after incubation, delivers isopropanol to reaction chambers to precipitate cleaved polynucleotide products.

After incubation, in S1502, a mild vacuum is applied through waste manifold 504 to draw the isopropanol-containing product from reaction chambers into the aligned purification chambers of purification plate 804, 904. In S1504, cleavage reagents and/or purification reagents may be moved through a purification plate by applying a vacuum or by applying a positive pressure. In S1506, product in purification chambers of the purification plate 804, 904 may be washed (desalted) to remove excess salts.

In some embodiments, both the synthesis plate 502, 902 and purification plate 804, 904 may remain at station B. Then, in S1504, cleavage reagents and/or purification reagents may be moved through a purification plate by applying a vacuum at station B. In S1506, while in station B, product in purification chambers of the purification plate 804, 904 may be washed (desalted) to remove excess salts.

FIG. 19 is a flowchart for an exemplary elution sub-process. The silica of the isolation chamber captures the precipitated polynucleotide and after washing S1506, in S1110, the captured polynucleotide can be eluted from the silica.

Station B 505 comprises a vacuum manifold 506 which can be used for releasing purified or captured polynucleotide product from wells of a purification plate and transfer to a quantification plate 806, 906 mounted below it on vacuum manifold 506. While the cleavage reaction is implemented, plate mover 524 travels along track 526 and rearranges plates at stations A 503 and D 528 so that the polynucleotide purification plate 804, 904 is placed at station A 503 and the quantification plate 806, 906 is placed on top of vacuum manifold 506 at station B 505. Plate mover 524 then moves the polynucleotide purification plate 804, 904 to station B 505 and places it on top of the quantification plate 806, 906. During placement of polynucleotide purification plate 804, 904 and placement of quantification plate 806, 906, the plate lifting platform is moved vertically in order to position the quantification plate 806, 906 at a predetermined distance from the polynucleotide purification plate 804, 904. In S1602, gantry 508 then delivers elution solution (e.g. water or TE) to the wells of the polynucleotide purification plate 804, 904 and, in S1604, the adsorbed polynucleotide product is eluted into the wells of the quantification plate 806, 906.

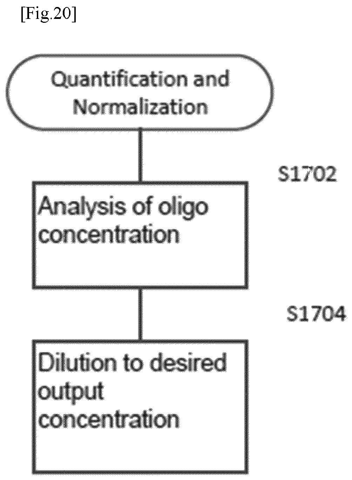

FIG. 20 is a flowchart for an exemplary quantification and normalization sub-process. After purified polynucleotide is eluted from the purification wells of purification plate 804, 904, the purification plate 804, 904 is moved to station C 510 and quantification plate 806, 906 is moved to station D 528 where, in S1702, it is subsequently inserted into spectrophotometer 533 where the concentration of each well is measured. In some embodiments, quantification plate 806, 906 may be returned to station A 503 where liquid levels may be measured so that polynucleotide amounts may be determined from measured concentrations.

In S1704, the quantification plate is moved back to station A where concentrations are normalized if necessary. In particular, after measurement, the quantification plate is transferred from spectrophotometer 533 to station A 503 where additional fluid (e.g. elution buffer) is added to wells as necessary to normalize concentrations across all the wells or to adjust concentrations to meet user specified concentration values for different polynucleotide product.

### REFERENCE SIGNS

2: Rectangular Base
4: Corner
6: Interior Fluid Line
8: First Aperture
10: Screw
12: Second Aperture
14: Screw Thread Mechanism
18: Tubing Connector
300: Instrument
500: Apparatus For Enzymatic Synthesis Of A Plurality Of Polynucleotides
502: Synthesis Plate
503: Station A
504: Waste Manifold
505: Station B
506: Vacuum Manifold
508: Gantry Head
509: Gantry
510: Station C
512: White Arrow
514: Cabinet Door
515a: Track
515b: Track
516: Reagent Storage Cabinet
517: Wall
518: Pumps
520: User Interface Touch Screen
524: Plate Mover
526: Track
528: Station D
530: Reagent Bottles or Reservoirs
532: Component
533: Spectrophotometer or Fluorometer
540, 560: Reagent Rack
552: Receiving Structure
554, 556: Positioning Tab
555, 557: Openings
600, 610: Sipper Plates
601, 611: Cover Plate
602, 612: Plate Inserts
604, 614: Protruding Rod
606, 616: Sipping Tube
608, 618: Remaining Portion
700: Heater-Shaker Module
701: Well Plate Holder
702: Clamp Lever
704: Release Latch
706: Clamp
707: Bearing
712: Roller
714: Spring
802, 902: Synthesis Plate
804, 904: Purification Plate
806, 906: Quantification Plate
808, 908: Lid
1000: Vacuum Transfer Station
1004: Wedge-Shaped Component
1002: Linear Bearing
1003: Lid upper plate
1004: Lid lower plate
1005: Rubber Gasket Lamination
1006: Plate Lifting Platform
1007: Thermoplastic Gasket Lamination
1008: Lid
1009: Gasket
1010: Horizontal Actuator
1012: Vacuum Line Connector
1014: Tab
1016: Screw
1020: Drainage

## Claims

1. An apparatus (500) for enzymatic synthesis of a plurality of polynucleotides, the apparatus (500) comprising:
a first well plate of a plurality of well plates (502, 902, 804, 904, 806, 906) having a number of wells;
a second well plate of the plurality of well plates (502, 902, 804, 904, 806, 906) having a number of wells arranged to correspond to the number of wells of the first well plate; and
a vacuum transfer station (1000) **characterised in that** the vacuum station comprises a plate lifting platform (1006) that is moved vertically by a horizontally driven wedge-shaped component (1004), the plate lifting platform (1006) being configured to move vertically to raise and lower the second well plate,
wherein when the first well plate is moved to and placed on the vacuum transfer station (1000) above the second well plate, the wedge-shaped component (1004) is configured to raise the plate lifting platform (1006) to position the second well plate to a predetermined distance (D1, D2, D3, D4) from the first well plate.

2. The apparatus (500) of claim 1, wherein the first well plate and the second well plate placed on the vacuum transfer station are respectively a synthesis plate (502, 902) and a purification plate (804, 904) or respectively a purification plate (804, 904) and a quantification plate (806, 906),
wherein the predetermined distance (D1, D2, D3, D4) is between a bottom surface of the first well plate (502, 902, 804, 904) and a bottom surface of the second well plate (804, 904, 806, 906), and
wherein the determined distance (D1, D2, D3, D4) is function to the type of the well plates placed on the vacuum transfer station and/or function to the number of wells of the well plates.

3. The apparatus (500) according to any one of the preceding claims, wherein the vacuum transfer station (1000) includes a lid (808, 908, 1008) having a frame structure that is sized to mount the first well plate, and
wherein the lid (808, 908, 1008) has an opening within the frame structure that is sufficient to allow communication between the wells in the first well plate and the corresponding wells in the second well plate.

4. The apparatus (500) according to any one of the preceding claims, wherein the plate lifting platform (1006) includes a tab (1014) extending from an edge of the plate lifting platform (1006), and the wedge-shaped component (1004) includes a diagonal edge, and
wherein the diagonal edge of the wedge-shaped component (1004) is configured to slide against the tab (1014) to raise or lower the plate lifting platform (1006).

5. The apparatus (500) according to any one of the preceding claims, wherein the vacuum transfer station (1000) includes a drainage section (1020) below the plate lifting platform (1006) for removing leakage that may occur from the second well plate, wherein the drainage section (1020) includes an angled surface.

6. The apparatus (500) according to any one of the preceding claims, wherein the vacuum transfer station (1000) further comprises:
a rectangular base (2) configured to hold the plurality of reaction wells, and
a vacuum tubing connector (1012) connected to a corner (4) of the base (2) and in fluid communication with a filter side or a sample side of the plurality of reaction wells when the reaction wells are held by the base (2).

7. The apparatus (500) according to any one of the preceding claims, further comprising a heater-shaker module (700) for applying heat and agitation during the enzymatic synthesis, said heater-shaker module (700) comprising a well plate holder (701) configured to receive at least one of the plurality of well plates and a clamping mechanism (706, 702, 714) for clamping the one or more of the plurality of well plates in the well plate holder (701) during the enzymatic synthesis.

8. A method of enzymatic synthesis of a plurality of polynucleotides by an enzymatic synthesis apparatus (500) according to claim 1, the method comprising:
positioning the second well plate on the plate lifting platform (1006);
positioning the first well plate on the vacuum transfer station (1000), above the second well plate;
vertically moving the plate lifting platform (1006) by the horizontally driven wedge-shaped component (1004) to raise the second well plate and position this second well plate to a predetermined distance (D1, D2, D3, D4) from the first well plate.

9. The method of claim 8, further comprising mounting a lid (808, 908, 1008) on the vacuum transfer station (1000) so that the first well plate is positioned on this lid (808, 908, 1008) wherein the lid comprises a frame that is sized to mount the first well plate and have an opening within the frame structure that is sufficient to allow communication between wells in the first well plate and corresponding wells in the second well plate.

10. The method according to any one of claims 8 to 9, further comprising:
drawing, by a vacuum source of the vacuum transfer station (1000), a solution from the wells of the first well plate through a filter of the first well plate to obtain a product in the wells of the second well plate.

11. The method according to claim 10 wherein the predetermined distance between the first well plate and the second well plate is a first predetermined distance (D1, D3), the enzymatic synthesis apparatus (500) further including a third well plate of the plurality of well plates having a number of wells, a fourth well plate of the plurality of well plates having a number of wells arranged to correspond with the number of wells of the third well plate, the method further comprising:
removing from the vacuum transfer station (1000) both first well plate and second well plate;
positioning the fourth well plate on the plate lifting platform (1006);
positioning the third well plate on the vacuum transfer station (1000), above the fourth well plate;
vertically moving the plate lifting platform (1006) by the horizontally driven wedge-shaped component (1004) to raise the fourth well plate and position this fourth well plate to a second predetermined distance (D2, D4) from the third well plate,
the second predetermined distance (D2, D4) being different from the first predetermined distance (D1, D3).

12. The method according to any one of claims 8 to 11, further comprising:
adding a desalting solution to the wells of the first well plate;
drawing, by the vacuum source of the vacuum transfer station (1000), desalted polynucleotides through a filter of the first well plate; and
capturing, in wells of the second well plate, desalted polynucleotide products.

13. The method according to any one of claims 8 to 11, further comprising:
vertically moving the plate lifting platform (1006) to a fully raised position that is even with an uppermost surface of the vacuum transfer station (1000) so that it receives the second well plate or the fourth well plate.

14. The method according to any one claims 8 to 13, wherein, the polynucleotide synthesis process comprises at least one step of removing a volume of waste eluent from a plurality of reaction wells placed on or within the vacuum transfer station (1000) by application of a pressure differential through the vacuum tubing connector (1012)

15. The method according to any one claims 8 to 14, wherein the apparatus (500) include a heater-shaker module (700) for applying the heat and agitation during the enzymatic synthesis, the heater-shaker module (700) having a clamping mechanism for clamping one or more well plates during the enzymatic synthesis, the clamping mechanism comprising a pair of clamps (706) positioned on opposite ends of a well plate holder (701), a pair of clamp levers (702) mounted to an axis of rotation of the respective clamp (706), the method comprising:
opening the clamps (706) by pushing the pair of clamp levers (712) outwards away from each other in a horizontal direction;
placing at least one of the well plates on the well plate holder (701) of the heater-shaker module (700);
closing the clamps (706) by pushing the pair of levers (702) inwards towards each other in order to sealingly mount the at least one of the well plates in the heater-shaker module (700).

## Patentansprüche

1. Vorrichtung (500) zur enzymatischen Synthese einer Mehrzahl von Polynukleotiden, wobei die Vorrichtung (500) umfasst:
eine erste Well-Platte aus einer Mehrzahl von Well-Platten (502, 902, 804, 904, 806, 906) mit einer Anzahl von Wells;
eine zweite Well-Platte aus der Mehrzahl von Well-Platten (502, 902, 804, 904, 806, 906) mit einer Anzahl von Wells, welche dazu angeordnet sind, der Anzahl der Wells der ersten Well-Platte zu entsprechen; und
eine Vakuum-Transferstation (1000), **dadurch gekennzeichnet, dass** die Vakuum-Station eine Plattenhebeplattform (1006) umfasst, welche durch eine horizontal angetriebene keilförmige Komponente (1004) vertikal bewegt wird, wobei die Plattenhebeplattform (1006) dazu eingerichtet ist, sich vertikal zu bewegen, um die zweite Well-Platte zu heben und zu senken,
wobei, wenn die erste Well-Platte zu der Vakuum-Transferstation (1000) bewegt und darauf über der zweiten Well-Platte platziert wird, die keilförmige Komponente (1004) dazu eingerichtet ist, die Plattenhebeplattform (1006) zu heben, um die zweite Well-Platte in einem vorbestimmten Abstand (D1, D2, D3, D4) von der ersten Well-Platte zu positionieren.

2. Vorrichtung (500) nach Anspruch 1, wobei die erste Well-Platte und die zweite Well-Platte, welche auf der Vakuum-Transferstation platziert sind, eine Syntheseplatte (502, 902) beziehungsweise eine Aufreinigungsplatte (804, 904) oder eine Aufreinigungsplatte (804, 904) beziehungsweise eine Quantifizierungsplatte (806, 906) sind,
wobei der vorbestimmte Abstand (D1, D2, D3, D4) zwischen einer Bodenfläche der ersten Well-Platte (502, 902, 804, 904) und einer Bodenfläche der zweiten Well-Platte (804, 904, 806, 906) besteht, und
wobei der bestimmte Abstand (D1, D2, D3, D4) abhängig von der Art der auf der Vakuum-Transferstation platzierten Well-Platten und/oder abhängig von der Anzahl von Wells der Well-Platten ist.

3. Vorrichtung (500) nach einem der vorhergehenden Ansprüche, wobei die Vakuum-Transferstation (1000) einen Deckel (808, 908, 1008) umfasst, welcher eine Rahmenstruktur aufweist, welche dazu dimensioniert ist, die erste Well-Platte aufzunehmen, und
wobei der Deckel (808, 908, 1008) eine Öffnung innerhalb der Rahmenstruktur aufweist, welche ausreichend ist, um Kommunikation zwischen den Wells in der ersten Well-Platte und den entsprechenden Wells in der zweiten Well-Platte zu erlauben.

4. Vorrichtung (500) nach einem der vorhergehenden Ansprüche, wobei die Plattenhebeplattform (1006) eine Lasche (1014) umfasst, welche sich von einem Rand der Plattenhebeplattform (1006) erstreckt, und die keilförmige Komponente (1004) einen diagonalen Rand aufweist, und wobei der diagonale Rand der keilförmigen Komponente (1004) dazu eingerichtet ist, gegen die Lasche (1014) zu gleiten, um die Plattenhebeplattform (1006) zu heben oder zu senken.

5. Vorrichtung (500) nach einem der vorhergehenden Ansprüche, wobei die Vakuum-Transferstation (1000) einen Drainageabschnitt (1020) unter der Plattenhebeplattform (1006) zum Entfernen von Leckage umfasst, welche von der zweiten Well-Platte auftreten kann, wobei der Drainageabschnitt (1020) eine gewinkelte Fläche umfasst.

6. Vorrichtung (500) nach einem der vorhergehenden Ansprüche, wobei die Vakuum-Transferstation (1000) ferner umfasst:
eine rechteckige Basis (2), welche dazu eingerichtet ist, die Mehrzahl von Reaktions-Wells zu halten, und
einen Vakuumschlauchverbinder (1012), welcher mit einer Ecke (4) der Basis (2) verbunden ist und in Fluidkommunikation mit einer Filterseite oder einer Probenseite der Mehrzahl von Reaktions-Wells steht, wenn die Reaktions-Wells von der Basis (2) gehalten werden.

7. Vorrichtung (500) nach einem der vorhergehenden Ansprüche, ferner umfassend ein Heizer-Schüttler-Modul (700) zum Anwenden von Wärme und Bewegung während der enzymatischen Synthese, wobei das Heizer-Schüttler-Modul (700) einen Well-Plattenhalter (701), welcher dazu eingerichtet ist, wenigstens eine der Mehrzahl von Well-Platten zu empfangen, und einen Klemmmechanismus (706, 702, 714) zum Klemmen der einen oder mehreren der Mehrzahl von Well-Platten in dem Well-Plattenhalter (701) während der enzymatischen Synthese umfasst.

8. Verfahren zur enzymatischen Synthese einer Mehrzahl von Polynukleotiden mittels einer enzymatischen Synthesevorrichtung (500) nach Anspruch 1, wobei das Verfahren umfasst:
Positionieren der zweiten Well-Platte auf der Plattenhebeplattform (1006);
Positionieren der ersten Well-Platte auf der Vakuum-Transferstation (1000) über der zweiten Well-Platte;
vertikales Bewegen der Plattenhebeplattform (1006) durch die horizontal angetriebene keilförmige Komponente (1004), um die zweite Well-Platte zu heben und diese zweite Well-Platte in einem vorbestimmten Abstand (D1, D2, D3, D4) von der ersten Well-Platte zu positionieren.

9. Verfahren nach Anspruch 8, ferner umfassend Anbringen eines Deckels (808, 908, 1008) an der Vakuum-Transferstation (1000) derart, dass die erste Well-Platte auf diesem Deckel (808, 908, 1008) positioniert ist, wobei der Deckel einen Rahmen umfasst, welcher dazu dimensioniert ist, die erste Well-Platte aufzunehmen, und eine Öffnung innerhalb der Rahmenstruktur aufzuweisen, welche ausreichend ist, um Kommunikation zwischen Wells in der ersten Well-Platte und entsprechenden Wells in der zweiten Well-Platte zu erlauben.

10. Verfahren nach einem der Ansprüche 8 bis 9, ferner umfassend:
Ziehen, mittels einer Vakuumquelle der Vakuum-Transferstation (1000), einer Lösung von den Wells der ersten Well-Platte durch einen Filter der ersten Well-Platte, um ein Produkt in den Wells der zweiten Well-Platte zu erhalten.

11. Verfahren nach Anspruch 10, wobei der vorbestimmte Abstand zwischen der ersten Well-Platte und der zweiten Well-Platte ein erster vorbestimmter Abstand (D1, D3) ist, wobei die enzymatische Synthesevorrichtung (500) ferner eine dritte Well-Platte aus der Mehrzahl von Well-Platten mit einer Anzahl von Wells und eine vierte Well-Platte aus der Mehrzahl von Well-Platten mit einer Anzahl von Wells umfasst, welche dazu angeordnet sind, der Anzahl von Wells der dritten Well-Platte zu entsprechen, wobei das Verfahren ferner umfasst:
Entfernen sowohl der ersten Well-Platte als auch der zweiten Well-Platte aus der Vakuum-Transferstation (1000);
Positionieren der vierten Well-Platte auf der Plattenhebeplattform (1006);
Positionieren der dritten Well-Platte auf der Vakuum-Transferstation (1000) über der vierten Well-Platte;
vertikales Bewegen der Plattenhebeplattform (1006) durch die horizontal angetriebene keilförmige Komponente (1004), um die vierte Well-Platte zu heben und diese vierte Well-Platte in einem zweiten vorbestimmten Abstand (D2, D4) von der dritten Well-Platte zu positionieren,
wobei der zweite vorbestimmte Abstand (D2, D4) verschieden von dem ersten vorbestimmten Abstand (D1, D3) ist.

12. Verfahren nach einem der Ansprüche 8 bis 11, ferner umfassend:
Zufügen einer Entsalzungslösung zu den Wells der ersten Well-Platte;
Ziehen, mittels der Vakuumquelle der Vakuum-Transferstation (1000), von entsalzten Polynukleotiden durch einen Filter der ersten Well-Platte; und
Auffangen von entsalzten Polynukleotidprodukten in Wells der zweiten Well-Platte.

13. Verfahren nach einem der Ansprüche 8 bis 11, ferner umfassend:
vertikales Bewegen der Plattenhebeplattform (1006) in eine vollständig gehobene Position, welche eben mit einer obersten Fläche der Vakuum-Transferstation (1000) ist, derart, dass sie die zweite Well-Platte oder die vierte Well-Platte empfängt.

14. Verfahren nach einem der Ansprüche 8 bis 13, wobei der Polynukleotidsyntheseprozess wenigstens einen Schritt des Entfernens eines Volumens an Abfall-Elutionsmittel von einer Mehrzahl von Reaktions-Wells, welche auf oder in der Vakuum-Transferstation (1000) platziert sind, mittels Anwenden eines Druckunterschieds durch den Vakuumschlauchverbinder (1012) umfasst.

15. Verfahren nach einem der Ansprüche 8 bis 14, wobei die Vorrichtung (500) ein Heizer-Schüttler-Modul (700) zum Anwenden von Wärme und Bewegung während der enzymatischen Synthese umfasst, wobei das Heizer-Schüttler-Modul (700) einen Klemmmechanismus zum Klemmen einer oder mehrerer Well-Platten während der enzymatischen Synthese aufweist, wobei der Klemmmechanismus ein Paar von Klemmen (706), welche an entgegengesetzten Enden eines Well-Plattenhalters (701) positioniert sind, und ein Paar von Klemmhebeln (702) umfasst, welches an einer Rotationsachse der jeweiligen Klemme (706) angebracht ist, wobei das Verfahren umfasst:
Öffnen der Klemmen (706) durch Drücken des Paares von Klemmhebeln (712) nach außen voneinander weg in horizontaler Richtung;
Platzieren wenigstens einer der Well-Platten auf dem Well-Plattenhalter (701) des Heizer-Schüttler-Moduls (700);
Schließen der Klemmen (706) durch Drücken des Paares von Hebeln (702) nach innen aufeinander zu, um die wenigstens eine der Well-Platten dichtend in dem Heizer-Schüttler-Modul (700) aufzunehmen.

## Revendications

1. Appareil (500) pour la synthèse enzymatique d'une pluralité de polynucléotides, l'appareil (500) comprenant :
une première plaque multipuits d'une pluralité de plaques multipuits (502, 902, 804, 904, 806, 906) ayant un certain nombre de puits ;
une deuxième plaque multipuits de la pluralité de plaques multipuits (502, 902, 804, 904, 806, 906) ayant un nombre de puits agencé pour correspondre au nombre de puits de la première plaque multipuits ; et
une station de transfert sous vide (1000) **caractérisée en ce que** la station de transfert sous vide comprend une plateforme de levage de plaque (1006) qui est déplacée verticalement par un composant en forme de coin (1004) entraîné horizontalement, la plateforme de levage de plaque (1006) étant configurée pour se déplacer verticalement afin de soulever et d'abaisser la deuxième plaque multipuits,
dans lequel, lorsque la première plaque multipuits est déplacée et placée sur la station de transfert sous vide (1000) au-dessus de la deuxième plaque multipuits, le composant en forme de coin (1004) est configuré pour soulever la plateforme de levage de plaque (1006) afin de positionner la deuxième plaque multipuits à une distance prédéterminée (D1, D2, D3, D4) de la première plaque multipuits.

2. Appareil (500) selon la revendication 1, dans lequel la première plaque multipuits et la deuxième plaque multipuits placées sur la station de transfert sous vide sont respectivement une plaque de synthèse (502, 902) et une plaque de purification (804, 904) ou respectivement une plaque de purification (804, 904) et une plaque de quantification (806, 906),
dans lequel la distance prédéterminée (D1, D2, D3, D4) se situe entre une surface inférieure de la première plaque multipuits (502, 902, 804, 904) et une surface inférieure de la deuxième plaque multipuits (804, 904, 806, 906), et
dans lequel la distance déterminée (D1, D2, D3, D4) est fonction du type des plaques multipuits placées sur la station de transfert sous vide et/ou fonction du nombre de puits des plaques multipuits.

3. Appareil (500) selon l'une quelconque des revendications précédentes, dans lequel la station de transfert sous vide (1000) inclut un couvercle (808, 908, 1008) ayant une structure de châssis qui est dimensionnée pour monter la première plaque multipuits, et
dans lequel le couvercle (808, 908, 1008) a une ouverture à l'intérieur de la structure de châssis qui est suffisante pour permettre une communication entre les puits de la première plaque multipuits et les puits correspondants de la deuxième plaque multipuits.

4. Appareil (500) selon l'une quelconque des revendications précédentes, dans lequel la plateforme de levage de plaque (1006) inclut une languette (1014) s'étendant depuis un bord de la plateforme de levage de plaque (1006), et le composant en forme de coin (1004) inclut un bord diagonal, et
dans lequel le bord diagonal du composant en forme de coin (1004) est configuré pour glisser contre la languette (1014) afin de soulever ou d'abaisser la plateforme de levage de plaque (1006).

5. Appareil (500) selon l'une quelconque des revendications précédentes, dans lequel la station de transfert sous vide (1000) inclut une section de drainage (1020) sous la plateforme de levage de plaque (1006) pour éliminer les fuites qui peuvent survenir de la deuxième plaque multipuits, dans lequel la section de drainage (1020) inclut une surface en angle.

6. Appareil (500) selon l'une quelconque des revendications précédentes, dans lequel la station de transfert sous vide (1000) comprend en outre :
une base rectangulaire (2) configurée pour tenir la pluralité de puits de réaction, et
un connecteur de tubulure à vide (1012) raccordé à un coin (4) de la base (2) et en communication fluidique avec un côté filtre ou un côté échantillon de la pluralité de puits de réaction lorsque les puits de réaction sont contenus par la base (2).

7. Appareil (500) selon l'une quelconque des revendications précédentes, comprenant en outre un module de chauffage-agitation (700) pour appliquer de la chaleur et une agitation pendant la synthèse enzymatique, ledit module de chauffage-agitation (700) comprenant un support de plaque multipuits (701) configuré pour recevoir au moins une de la pluralité de plaques multipuits et un mécanisme de serrage (706, 702, 714) pour serrer la ou les plusieurs de la pluralité de plaques multipuits dans le support de plaque multipuits (701) pendant la synthèse enzymatique.

8. Procédé de synthèse enzymatique d'une pluralité de polynucléotides par un appareil de synthèse enzymatique (500) selon la revendication 1,
le procédé comprenant :
le positionnement de la deuxième plaque multipuits sur la plateforme de levage de plaque (1006) ;
le positionnement de la première plaque multipuits sur la station de transfert sous vide (1000), au-dessus de la deuxième plaque multipuits ;
le déplacement vertical de la plateforme de levage de plaque (1006) par le composant en forme de coin (1004) entraîné horizontalement pour soulever la deuxième plaque multipuits et positionner cette deuxième plaque multipuits à une distance prédéterminée (D1, D2, D3, D4) de la première plaque multipuits.

9. Procédé selon la revendication 8, comprenant en outre le montage d'un couvercle (808, 908, 1008) sur la station de transfert sous vide (1000) de sorte que la première plaque multipuits est positionnée sur ce couvercle (808, 908, 1008), dans lequel le couvercle comprend un châssis qui est dimensionné pour monter la première plaque multipuits et avoir une ouverture à l'intérieur de la structure de châssis qui est suffisante pour permettre une communication entre les puits de la première plaque multipuits et les puits correspondants de la deuxième plaque multipuits.

10. Procédé selon l'une quelconque des revendications 8 à 9, comprenant en outre :
l'aspiration, par une source de vide de la station de transfert sous vide (1000), d'une solution depuis les puits de la première plaque multipuits à travers un filtre de la première plaque multipuits pour obtenir un produit dans les puits de la deuxième plaque multipuits.

11. Procédé selon la revendication 10, dans lequel la distance prédéterminée entre la première plaque multipuits et la deuxième plaque multipuits est une première distance prédéterminée (D1, D3), l'appareil de synthèse enzymatique (500) incluant en outre une troisième plaque multipuits de la pluralité de plaques multipuits ayant un certain nombre de puits, une quatrième plaque multipuits de la pluralité de plaques multipuits ayant un nombre de puits agencé pour correspondre au nombre de puits de la troisième plaque multipuits, le procédé comprenant en outre :
le retrait de la station de transfert sous vide (1000) à la fois de la première plaque multipuits et de la deuxième plaque multipuits ;
le positionnement de la quatrième plaque multipuits sur la plateforme de levage de plaque (1006) ;
le positionnement de la troisième plaque multipuits sur la station de transfert sous vide (1000), au-dessus de la quatrième plaque multipuits ;
le déplacement vertical de la plateforme de levage de plaque (1006) par le composant en forme de coin (1004) entraîné horizontalement pour soulever la quatrième plaque multipuits et positionner cette quatrième plaque multipuits à une deuxième distance prédéterminée (D2, D4) de la troisième plaque multipuits,
la deuxième distance prédéterminée (D2, D4) étant différente de la première distance prédéterminée (D1, D3).

12. Procédé selon l'une quelconque des revendications 8 à 11, comprenant en outre :
l'ajout d'une solution de dessalage aux puits de la première plaque multipuits ;
l'aspiration, par la source de vide de la station de transfert sous vide (1000), de polynucléotides dessalés à travers un filtre de la première plaque multipuits ; et
la capture, dans les puits de la deuxième plaque multipuits, de produits de polynucléotides dessalés.

13. Procédé selon l'une quelconque des revendications 8 à 11, comprenant en outre :
le déplacement vertical de la plateforme de levage de plaque (1006) jusqu'à une position entièrement levée qui est au même niveau qu'une surface la plus haute de la station de transfert sous vide (1000) de sorte qu'elle reçoit la deuxième plaque multipuits ou la quatrième plaque multipuits.

14. Procédé selon l'une quelconque des revendications 8 à 13, dans lequel le processus de synthèse de polynucléotides comprend au moins une étape d'élimination d'un volume d'éluant usagé d'une pluralité de puits de réaction placés sur ou dans la station de transfert sous vide (1000) par application d'un différentiel de pression à travers le connecteur de tubulure à vide (1012).

15. Procédé selon l'une quelconque des revendications 8 à 14, dans lequel l'appareil (500) inclut un module de chauffage-agitation (700) pour appliquer la chaleur et l'agitation pendant la synthèse enzymatique, le module de chauffage-agitation (700) ayant un mécanisme de serrage pour serrer une ou plusieurs plaques multipuits pendant la synthèse enzymatique, le mécanisme de serrage comprenant une paire de pinces (706) positionnées sur des extrémités opposées d'un support de plaque multipuits (701), une paire de leviers de pince (702) montés sur un axe de rotation de la pince respective (706), le procédé comprenant :
l'ouverture des pinces (706) en poussant la paire de leviers de pince (712) vers l'extérieur en s'éloignant l'un de l'autre dans une direction horizontale ;
le placement d'au moins une des plaques multipuits sur le support de plaque multipuits (701) du module de chauffage-agitation (700) ;
la fermeture des pinces (706) en poussant la paire de leviers (702) vers l'intérieur et l'un vers l'autre afin de monter de manière étanche la au moins une des plaques multipuits dans le module de chauffage-agitation (700).
